# EUROPÄISCHE PATENTSCHRIFT

(11) **EP 0 350 478 B1**
(45) Veröffentlichungstag und Bekanntmachung des Hinweises auf die Patenterteilung: **03.11.1993**
(21) Anmeldenummer: 87902048.5
(22) Anmeldetag: 19.03.1987
(51) Int. Cl.: H04Q 3/545, G06F 15/16

(54) **VERFAHREN ZUM BETRIEB EINER MULTIPROZESSOR-ZENTRALSTEUEREINHEIT EINES VERMITTLUNGSSYSTEMES**
PROCESS FOR OPERATING A MULTIPROCESSOR CENTRAL CONTROL UNIT OF A RELAY SYSTEM
PROCEDE POUR FAIRE FONCTIONNER UNE UNITE DE COMMANDE CENTRALE A MULTIPROCESSEUR D'UN SYSTEME DE COMMUTATION

(43) Veröffentlichungstag der Anmeldung: 17.01.1990
(73) Patentinhaber: SIEMENS AKTIENGESELLSCHAFT, 80333 München (DE)
(72) Erfinder: LEICHUM, Axel, Boca Raton, FL 33486 (US)
(86) Internationale Anmeldenummer: DE8700123
(87) Internationale Veröffentlichungsnummer: WO8807314

(56) Entgegenhaltungen:
- DE-A- 3 334 796
- GB-A- 2 013 451
- Telcom Report, vol. 9, issue 1, 1986 (München, DE); A.D. Leichum et al.: "Behandlung der Datenbasis bei der Inbetriebnahme und bei Erweiterungen von EWSD-Vermittlungsstellen", pages 22-26
- Ericsson Review, vol. 54, no. 3, 1977 (Stockholm, SE); L.G. Ericsson et al.: "Operation and maintenance characteristics of AKE 13", pages 125-135

## Beschreibung

Die Erfindung betrifft das heikle Problem, wie ein Vermittlungsbetriebsprogramm einer Zentralsteuereinheit eines rechnergesteuerten Vermittlungssystemes nachträglich grundlegend geändert werden kann, ohne die Bearbeitung von neu anfallenden Vermittlungsaufträgen völlig für längere Zeit stoppen zu müssen.

Die Erfindung verbessert das im Oberbegriff des Patentanspruches 1 genannte spezielle verfahren, welches für sich durch die Druckschrift EP-A2-141 246 ( = US-Ser.No.651,954 - 09/19/84 = VPA 83 P 1726 ) bekannt ist.

Dieses bekannte Verfahren eignet sich bereits zu Programmänderungen einer hochkomplexen Zentralsteuereinheit, welche extrem zuverlässig und extrem fehlertolerant ein besonders hoch verfügbares Vermittlungs system steuert. Auch an diese bekannte Zentralsteuereinheit sind bereits extrem viele, z.B. 50 000 oder 100 000 Teilnehmer anschließbar, deren Vermittlungsaufträge zuverlässig, nämlich möglichst fehlertolerant störungsfrei zu bearbeiten sind. Sie eignet sich im Prinzip auch zum simultanen Steuern der vielen Vermittlungs-Einzelfunktionen von Verbindungen mit unterschiedlichen Anforderungen, z.B zum simultanen Steuern von extrem vielen Telefongesprächen, Fernschreiben, Bildtelefongesprächen usw.. Die betreffende, viele zentrale Prozessoren enthaltende Zentralsteuereinheit enthält in redundanter Weise alle wichtigen Bestandteile gedoppelt, um ihre Zuverlässigkeit zu erhöhen, wobei in gedoppelten Speichern im Regelfall identische Daten gespeichert werden. Daher können sogar - meistens ohne jegliche Störung des normalen Vermittlungsbetriebes - jeweils Hälften solcher gedoppelter Bestandteile abgespalten und zu einem, im Prinzip je nach Wunsch relativ großen oder relativ kleinen, Spezialrechner zusammengeschaltet werden. So können Teile des Vermittlungsbetriebsprogrammes während des Vermittlungsbetriebes im Spezialrechner überarbeitet werden, also gelöscht, überschrieben oder ergänzt werden. Die Verfügbarkeit dieser Zentralsteuereinheit bleibt bei ausreichend hoch gewählter Anzahl von zentralen Prozessoren, z.B. bei sechzehn solchen Prozessoren für 50 000 Teilnehmer, sehr groß. Trotz Abspaltung des Spezialrechners und trotz dieser - vielleicht sogar Stunden dauernden - Überarbeitung und Programmänderung fällt diese Zentralsteuereinheit, wie oft erforderlich, weniger als z.B. 1 Minute pro Jahr aus, weil zeitaufwendige Urstarts trotz solcher Überarbeitungen und Programmänderungen meistens vermieden werden können.

In der oben genannten Druckschrift ist aber noch nicht das erfindungs gemäße Verfahren zum Überarbeiten auch der in Verwaltungsspeicherabschnitten gespeicherten Informationen beschrieben, um gleichzeitig für sehr viele Teilnehmer und/oder Systembestandteile die bisher gespeicherten Informationen zusammen mit der Größe und den Startadressen von Adreßräumen in sonstigen Speicherabschnitten der Zentralsteuereinheit umzuändern. Weil bei der Erfindung auch die Informationen in den betreffenden Verwaltungsspeichern modifiziert werden, brauchen bei der Erfindung nicht die - meistens sehr vielen - sonstigen Programmteile des Vermittlungssystems, welche virtuelle Adressen enthalten, mitgeändert zu werden, um die Zuverlässigkeit dieses Vermittlungssystems bei Sprüngen von den sonstigen Programmteilen in die umstrukturierten Informationen/Programmteile zu erreichen. Die Erfindung erleichtert also ganz außerordentlich, alle Programmteile ohne Einbuße der Verfügbarkeit vor Ort direkt in der Zentralsteuereinheit zu ändern, selbst wenn diese Programmänderungen gleichzeitig extrem viele Teilnehmer betreffen und selbst wenn es sich um Änderungen von sehr wichtigen, laufend intensiv benutzten Programmteilen handelt.

Für sich sind Adressenverwaltungseinheiten bekannt, die zum Umrechnen von logischen Adressen in physikalische Adressen (im Prinzip eventuell auch zu Umrechnung von physikalischen Adressen in logische Adressen) dienen. Durch die noch nicht veröffentlichte deutsche Patentanmeldung P 36 32 608.9 ( = VPA 86 P 1648 ) ist eine solche hochleistungsfähige, sehr rasch arbeitende Adressenverwaltungseinheit mit entsprechend geschickt aufgebautem eigenen Speicher beschrieben, wobei sich solche Adressenverwaltungseinheiten ganz besonders für die Bedürfnisse der hochleistungsfähigen, in der oben genannten Europäischen Anmeldung beschriebenen Multiprozessor-Zentralsteuereinheit eignen. In der zuletzt genannten deutschen Patentanmeldung ist übrigens nichts über Dopplungen und EDC-überwachten mikrosynchronen Parallelbetrieb des Speichers solcher Adressenverwaltungseinheiten angegeben.

In der noch nicht veröffentlichen deutschen Patentanmeldung P 36 22 369.7 (= VPA 86 P 1394 DE) ist ein Verfahren zum Betrieb einer Zentralsteuereinheit eines Vermittlungssystemes beschrieben, wobei die Zentralsteuereinheit nur zwei Prozessoren, welche normalerweise im Stand-by-Betrieb betrieben werden, enthält. Sobald in einer Hälfte der gedoppelten peripheren Systembestandteile ein erheblicher Fehler auftritt, werden in solchen Notbetriebszeiten Jene fehlerhaften, peripher an die Zentralsteuereinheit angeschlossenen, doppelt vorhandenen Vermittlungssystembestandteile abgespalten, wobei solche abgespaltenen peripheren Bestandteile, ebenso wie die nicht abgespaltenen peripheren Bestandteile, jeweils eigene Prozessoren und eigene Speicher enthalten. In der Notbetriebszeit wird zusätzlich der eine der beiden zentralen Prozessoren der Zentralsteuereinheit abgespalten, wobei dieser abgespaltene zentrale Prozessor die peripher angeschlossenen Speicher der peripher angeschlossenen Prozessoren neu lädt und wobei in dieser Notbetriebszeit der andere zentrale Prozessor der Zentralsteuereinheit zusammen mit der anderen - im allgemeinen intakten - Hälfte der peripher angeschlossenen Vermittlungssystembestandteile den Vermittlungsbetrieb aufrecht erhält, soweit dies möglich ist. Sobald die betreffenden peripheren Speicher der peripheren Prozessoren vom abgespaltenen zentralen Prozessor nachgeladen sind, übernehmen diese nachgeladenen peripheren Speicher zusammen mit den sonstigen bisher abgespaltenen Vermittlungssystembestandteilen den Vermittlungsbetrieb anstelle der anderen Hälfte der Vermittlungssystembestandteile, wobei danach die beiden Prozessoren der Zentralsteuereinheit wieder im Stand-by-Betrieb betrieben werden. In dieser älteren deutschen Patentanmeldung ist nichts über die Umstruktuierung von Informationen, erst recht nichts über die Umstruktuierung von die Zentralsteuereinheit (!) steuernden Informationen angegeben. Dementsprechend ist dort auch nichts über die Abspaltung eines Spezialrechners zur Änderung der Informationen in einem Verwaltungsspeicher der abgespaltenen Hälfte einer Zentralsteuereinheit mit gedoppeltem Bussystem, an welches viele zentrale Prozessoren und ein gedoppelter zentraler Hauptspeicher angeschlossen sind, angegeben.

Der Erfinder der vorliegenden Erfindung beschrieb selbst ziemlich ausführlich in der Druckschrift telcom report 9 (Jan./Febr. 1986), 22 - 26 (deutschsprachig, ausgeliefert am 21. März 1986) = telcom report 1986, No. 6, 304 - 309 (englischsprachig, noch später ausgeliefert) im wesentlichen die Softwareaspekte für eine Neuinbetriebnahme eines digital durch eine - im Prinzip beliebige - Zentralsteuereinheit gesteuerten Fernsprech-Vermittlungssystemes. Er beschrieb außerdem in dieser Druckschrift ziemlich ausführlich Softwareaspekte für nachträgliche Modifizierungen des betreffenden Vermittlungsbetriebsprogrammes, teilweise auch Softwareaspekte für die Neustrukturierung von - über die vielen Teilnehmer und Systembestandteile semipermanent zu speichernden - Informationen im Rahmen dieser Modifizierung des Vermittlungsbetriebsprogrammes, welches die Zentralsteuereinheit steuert. Zur Neustrukturierung dieser semipermanent gespeicherten Informationen werden bevorzugterweise die bisherigen, nun zu ändernden Vermittlungsbetriebsprogrammteile aus der Maschinensprache (welche der Maschinensprache der zugeordneten Prozessoren entspricht und im einfachsten Fall z.B. nur aus den Ziffern 0 und 1 besteht) in eine MML-Kommandosprache übersetzt, dann nach Bedarf modifiziert und - offensichtlich in die Maschinensprache rückübersetzt - wieder in das Gesamtpaket der verschiedenen Teile der Vermittlungsbetriebsprogramme eingefügt. Im letzten Absatz vor seiner "Schlußbetrachtung" wird in dieser Druckschrift pauschal ohne Hardware-detail-Angaben darauf hingewiesen, daß in Zukunft in einer "gesplitteten" Zentralsteuereinheit die eine "Hälfte" der Zentralsteuereinheit den Vermittlungsbetrieb weitersteuern können wird, während in der anderen "Hälfte" der Zentralsteuereinheit der entsprechende Datenblock des Vermittlungsbetriebsprogrammes modifiziert werden kann. In dieser Druckschrift ist nichts über Verwaltungsspeicher und daher nichts über die Vorteile der gleichzeitigen Änderung der dort gespeicherten Informationen angegeben. Ebenso ist dort nichts darüber angegeben, daß - wie bei der Erfindung - ein abgespaltener Spezialrechner im Regelfall nicht die "Hälfte" der Zentralsteuereinheit darstellt, sondern viel kleiner als diese Hälfte ist, also z.B. nur zwei zentrale Prozessoren enthält. Ebenso ist dort nichts über den normalerweise mikrosynchronen Parallelbetrieb aller gedoppelten Hauptbestandteile einer speziellen, relativ kompliziert aufgebauten Zentralsteuereinheit angegeben. Dementsprechend ist dort auch nichts über einen normalerweise mikrosynchronen Parallelbetrieb von EDC-überwachten Speicherhälften, erst recht nichts über einen solchen überwachten Parallelbetrieb von den eigenen Speicherabschnitten einer oder mehrerer Adressenverwaltungseinheiten angegeben. Ebenso ist dort nichts über einen speziellen Betrieb beider Speicherhälften in der Übergangszeit nach der späteren Wiedervereinigung eines Spezialrechners und einer restlichen Zentralsteuereinheit angegeben.

Gewisse Softwareaspekte - auch für Modifizierungen - eines Vermittlungsbetriebsprogrammes sind in sehr allgemeiner Weise und mit entsprechend wenig Bezug auf zugehörende Hardwareaspekte in der Druckschrift Proc. Conf. on Softw.Ing. for Telecomm. in Lund, 1983, 98 - 103 angegeben.

Autoren anderer Firmen berichteten ebenfalls über Softwareaspekte, auch für Modifizierungen eines Vermittlungsbetriebsprogrammes, jeweils mehr oder weniger bezogen auf spezielle Zentralsteuereinheit-Hardwarestrukturen, welche jeweils in deren Firmen gegeben sind:
So wurde in einem Vortrag auf der Internat. Comm. Conf. in Denver 14. Juni 1981, abgedruckt in der Druckschrift GTE Autom. Electric J., Nov./Dez. 1981, S. 184 - 187, über Softwareaspekte, auch bei Modifizierungen des Vermittlungsbetriebsprogrammes, für die Struktur ihres sog. GTD-5 EAX-Vermittlungssystemes berichtet, wobei, vgl. S. 187, rechte Spalte, Abs. 3, die noch nicht modifizierten Daten in einem ersten Speicherbereich, der den bisherigen Vermittlungsbetrieb weiterhin steuert, eingeschrieben bleiben, während die modifizierten Daten in einen anderen Speicherbereich eingeschrieben werden. Auch hier werden die Modifizierungen in einer höheren Kommandosprache durchgeführt. Es wird nicht ausführlich erläutert, wie später die Hardware-Umschaltung der Zentralsteuereinheit auf das neue modifizierte Vermittlungsbetriebsprogramm durchgeführt wird. Hier wird vor allem auch nicht das Abspalten einer gedoppelten Speicherhälfte, erst recht nicht auf das Abspalten einer gedoppelten, normalerweise mikrosynchron parallel betriebenen, für sich EDC-überwachten Speicherhälfte angeregt, auch nicht hinsichtlich eines Speichers einer Adressenverwaltungseinheit, erst recht nicht die spezielle Art und Weise, wie solche Speicherhälften in der Übergangszeit nach einer Wiedervereinigung eines abgespaltenen Spezialrechners und einer restlichen Zentralsteuereinheit bis zum normalen Parallelbetrieb der beiden Speicherhälften weiterarbeiten.

Softwareaspekte eines Vermittlungsbetriebsprogrammes sind für die Struktur- des sog. AXE 10-Vermittlungssystemes in der Druckschrift Ericcson Rev., 1985, No. 1, S. 2 - 10 in Bezug auf die dort gegebene spezielle Zentralsteuereinheit beschrieben, und zwar ab S. 8, rechte Spalte auch hinsichtlich Modifizierungen des Vermittlungsbetriebsprogrammes. Dort ist nichts über die Ausnutzung der Abspaltmöglichkeit einer gedoppelten Speicherhälfte, also auch nicht das Abspalten von normalerweise mikrosynchron parallel betriebenen, EDC-überwachten Speicherhälften angegeben, erst recht nicht hinsichtlich eines Speichers einer Adressenverwaltungseinheit. Es ist auch nicht eine spezielle Art und Weise angeregt, wie bei einer Wiedervereinigung eines abgespaltenen Spezialrechners und einer restlichen Zentralsteuereinheit vorzugehen ist.

In den Druckschriften AT&T Bell Lab.Rec. April 1984, S. 26 - 33 sind für das sog. 5-ESS-Vermittlungssystem, in Elektr. Nachrichtenw. 59 (1985), Nr. 1/2, S 60 - 67 für das sog. System 12, und in commut. & transmission 1986, No. 2, S. 5 - 16 für das sog. E-10-MT-Vermittlungssystem ebenfalls Softwareaspekte für Modifizierungen von Vermittlungsbetriebsprogrammen beschrieben, aber jeweils ohne klarem Bezug auf eine Abspaltung einer Speicherabschnittshälfte von gedoppelten Speichern. Erst recht wird nicht das Abspalten von normalerweise mikrosynchron parallel betriebenen, EDC-überwachten Speicherhälften, erst recht nicht hinsichtlich eines Speichers einer Adressenverwaltungseinheit, angeregt. Ebenso ist nicht der Betrieb der Zentralsteuereinheit in der Übergangszeit nach einer Wiedervereinigung von einem abgespaltenen Spezialrechner und einer restlichen Zentralsteuereinheit beschrieben.

In der Druckschrift EP-A2-141 245 ( = US-Ser.No.651,954 - 09/19/84 = VPA 83 P 1727 ) ist ein Verfahren für einen gedoppelten, in jeder Hälfte im Regelfall identische Daten speichernden Speicher beschrieben, das in einer Multiprozessor-Zentralsteuereinheit eines Vermittlungssystems angewendet wird. Durch dieses Verfahren überprüft sich der Speicher mittels eines EDC-Code selbst und korrigiert und aktualisiert mit einem besonderen Verfahren automatisch die in einer der Speicherhälfte fehlerhaft gespeicherten Digits. Hierbei wird der Speicherinhalt der vorher fehlerhaft speichernden Speicherhälfte nach und nach korrigiert, wobei zusätzlich gleichzeitig - entsprechend den inzwischen in der "intakten" Speicherhälfte durchgeführten Neueinschreibungen - auch alle Informationen in der vorher fehlerhaft speichernden Speicherhälfte aktualisiert wurden. Diese Korrekturen einschließlich Aktualisierungen der Informationen, die in der bisher fehlerhaft speichernden Speicherhälfte durchgeführt werden, erfolgen weitgehend während den - jeweils meistens nur sehr kurzen - Betriebspausen, in denen kein normaler Lese-Schreib-Betrieb in diesem Speicherabschnitt durchgeführt werden muß. Die Korrekturen und Aktualisierungen erfolgen nämlich dadurch, und zwar völlig selbsttätig,
daß einerseits während der Betriebspausen dieser Speicherhälften, in denen kein normaler, von anderen Systembestandteilen veranlaßter Lese-Betrieb oder Schreib-Betrieb durchgeführt wird, etappenweise der intakte Speicherinhalt der intakten Speicherhälfte unter identischen Adressen in die vorher fehlerhaft speichernde Speicherhälfte kopiert wird,
daß andererseits während des normalen Lese-Betriebes, der von anderen Systembestandteilen - z.B. Teilnehmern - veranlaßt wird und der zwischen jenen zum Kopieren ausgenutzten Betriebspausen durchgeführt wird, nur aus der intakten Speicherhälfte gelesen wird (wodurch der fehlerfreie Vermittlungsbetrieb sichergestellt wird), was z.B. durch Abschalten der Signalausgänge der fehlerhaft speichernden Speicherhälfte während dieses Lesens erreicht werden kann, und
daß beim normalen Schreib-Betrieb, der von anderen Systembestandteilen - z.B. Teilnehmern - veranlaßt wird, die einzuschreibenden Daten sofort und gleichzeitig in beide Speicherhälften unter identischen Adressen eingeschrieben werden, (wodurch die Aktualisierung aller gespeicherten Daten erreicht wird).
Erst wenn alle Daten in beiden Speicherhälften durch Kopieren identisch gemacht sind, werden beim normalen Lese- und Schreib-Betrieb beide Speicherhälften wieder wie normal EDC-überwacht mikrosynchron parallel betrieben, abgesehen von einem eventuellen tolerierbaren zeitlichen Schlupf.

Die Aufgabe der Erfindung,
eine hochkomplexe Zentralsteuereinheit, die möglichst fehlertolerant und hochverfügbar sein muß, so zu betreiben, daß das Vermittlungsbetriebsprogramm, ohne die Bearbeitung von neu anfallenden Vermittlungsaufträgen völlig für längere Zeit stoppen zu müssen, mit relativ geringem Aufwand gleichzeitig für eine sehr hohe Anzahl von Teilnehmern und/oder Systembestandteilen - bei Bedarf auch "vor Ort", also im Gebäude des Vermittlungsamtes - ohne Support-Rechner rasch ganz erheblich modifiziert werden kann,
wobei diese Modifizierungen des Vermittlungsbetriebsprogrammes auch völlige Neustrukturierungen von semipermanent zu speichernden Informationen, d.h. von entsprechenden Programmteilen und/ oder Daten, umfassen, und
wobei alle Vermittlungsbetriebsprogrammteile - sowohl die modifizierten als auch die unmodifizierten - zur Erleichterung der Programmerarbeitung virtuelle Adressen enthalten dürfen, die nicht mitmodifiziert werden müssen, sobald im Spezialrechner ein beliebig wichtiger, beliebig häufig benötigter, also an sich beliebiger Teil des Vermittlungsbetriebsprogramms von Grund auf - sogar seine Struktur - modifiziert wird, so daß auch die virtuellen Adressen, die in unmodifizierten Programmteilen enthalten sind, sowie die virtuellen Adressen von Speicherplätzen, in denen unmodifizierte Programmteile gespeichert sind, nicht mitmodifiziert werden müssen,
wird durch die im Patentanspruch 1 angegebenen Maßnahmen gelöst.

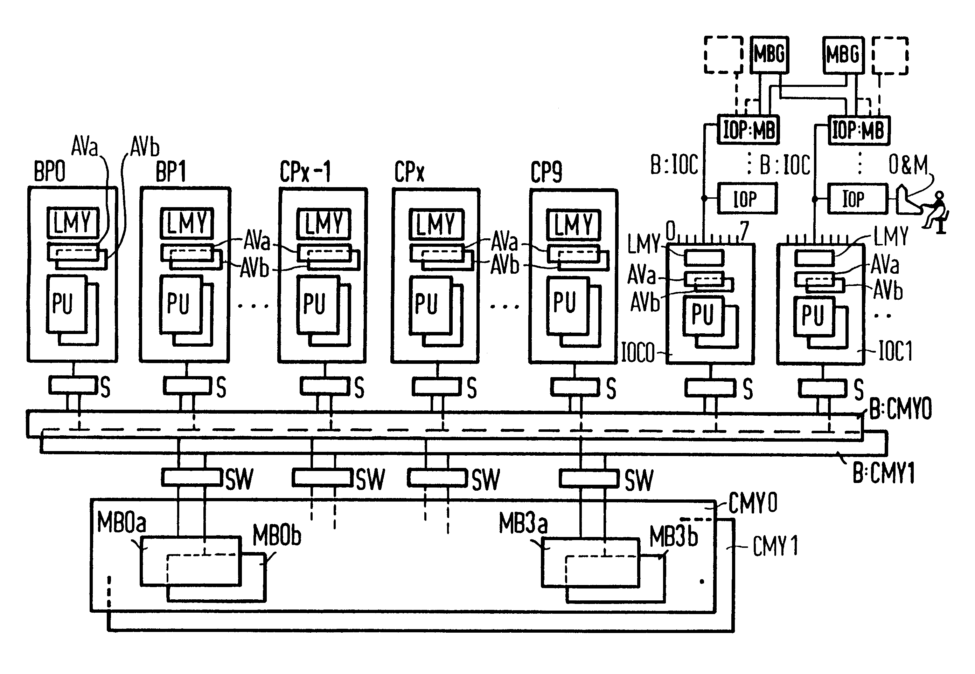

Die Erfindung und ihre Weiterbildungen werden anhand des in der Figur gezeigten Ausführungsbeispieles weiter erläutert. Dieses Beispiel ist weitgehend gemäß der bereits eingangs genannten Druckschrift EP-A2-141 246 aufgebaut und betrieben, so daß hier nicht auf alle Einzelheiten dieses Beispiels sehr ausführlich eingegangen werden muß. Die Figur zeigt also eine in hohem Maße fehlertolerante, hochverfügbare Multiprozessor-Zentralsteuereinheit eines digital gesteuerten Vermittlungssystemes mit den für die Erläuterung der Erfindung wichtigsten Bestandteilen. Die meisten wichtigen Bestandteile sind in redundanter Weise doppelt angebracht, für sich einzeln EDC-überwacht und, abgesehen von einem geringen tolerierbaren Schlupf, normalerweise mikrosynchron parallel betrieben. Bei Störungen kann die intakte Hälfte der gedoppelten Bestandteile jeweils alleine den Vermittlungsbetrieb übernehmen. Auch alle Übertragungen von einem Bestandteil zu einem anderen Bestandteil dieser Zentralsteuereinheit - ja sogar fast alle Übertragungen zwischen den verschiedenen Bestandteilen des ganzen Vermittlungssystemes - sind für sich, zur Vergrößerung der Zuverlässigkeit des- Vermittlungssystemes, mittels einer Vielzahl von EDC-Chips ebenfalls EDC-überwacht.

Die Zentralsteuereinheit enthält zur Vergrößerung der Rechengeschwindigkeit eine Vielzahl zentraler Prozessoren BP, CP und IOC, die z.B. gemäß der bereits genannten Druckschrift EP-A2-141 246 betrieben werden. Diese zentralen Prozessoren sind zur Vergrößerung der Verfügbarkeit und Zuverlässigkeit in sich jeweils gedoppelt. Sie enthalten nämlich zumindest die, abgesehen von einem geringen tolerierbaren Schlupf, mikrosynchron parallel betriebenen, jeweils für sich EDC-überwachten Prozessoreinheiten PU, welche z.B. gemäß der Druckschrift EP-A2-140 155 ( = US-Ser. No. 651, 954 - 09/19/84 = VPA 83 P 1723) aufgebaut und betrieben sein können.

Im gezeigten Beispiel enthalten diese zentralen Prozessoren zur Vergrößerung der Rechengeschwindigkeit und Zuverlässigkeit jeweils eigene lokale Speicher LMY, die z.B. gemäß der Druckschrift EP-A2-141 984 ( = US.Ser.No.651,954 - 09/19/84 = VPA 83 P 1724) betrieben werden. Diese lokalen Speicher LMY speichern dann jeweils besonders solche Programmteile, welche der betreffende Prozessor BP, CP, IOC häufig und/oder besonders rasch braucht, ohne erst über das Bussystem B:CMY auf den Hauptspeicher CMY zugreifen zu müssen; - die verschiedenen lokalen Speicher LMY dieser Prozessoren enthalten also zumindest weitgehend identische Teile des Vermittlungsbetriebsprogrammes. Diese lokalen Speicher LMY können im Prinzip ebenfalls - zur Vergrößerung der Verfügbarkeit und Zuverlässigkeit - in sich gemäß der bereits eingangs genannten Druckschrift EP-A2-141 245 gedoppelt und EDC-überwacht sein und dann, abgesehen von einem geringen tolerierbaren Schlupf, mikrosynchron in sich parallel betrieben werden.

Diese zentralen Prozessoren BP, CP, IOC sind über Schalter S - bzw. über IO-Einheiten S - mit dem Bussystem B:CMY verbunden, das zur Vergrößerung der Verfügbarkeit und Zuverlässigkeit ebenfalls in sich gedoppelt und EDC-überwacht sowie bis auf einen geringen tolerierbaren Schlupf mikrosynchron parallel betrieben ist. Dieses Bussystem B:CMY ist außerdem über eigene Schalter SW - bzw. über IO-Einheiten SW - mit dem zentralen Hauptspeicher CMY verbunden.

Dieser Hauptspeicher CMY enthält zur Verringerung seiner Zugriffszeiten - und zur Vergrößerung seiner Speicherkapazität, Zuverlässigkeit und Verfügbarkeit - mehrere Speicherblöcke MB mit jeweils eigenen Speichersteuerungen. Diese Speicherblöcke MB sind ebenfalls jeweils in sich gedoppelt und EDC-überwacht, sowie, abgesehen von einem geringen tolerierbaren Schlupf, normalerweise mikrosynchron parallel betrieben.

Nur in Sonderfällen, z.B. bei Betriebsstörungen oder in Spezialbetriebszeiten, wird eine der Hälften der EDC-überwachten gedoppelten Bestandteile der Zentralsteuereinheit ganz abgeschaltet oder abgespalten, wobei alleine die andere Hälfte den Vermittlungsbetrieb aufrecht erhält.

Im gezeigten Beispiel enthalten zumindest die Prozessoren BP, CP, IOC jeweils eine ihnen individuell zugeordnete Adressenverwaltungseinheit, die für sich Jeweils einen eigenen Verwaltungsspeicher AV enthält. Auch diese Verwaltungsspeicher AV können gedoppelt, für sich EDC-überwacht und parallel wie die anderen Speicher LMY, CMY betrieben sein. Diese individuell allen zentralen Prozessoren BP, CP, IOC zugeordneten Adressverwaltungseinheiten gestatten, virtuelle Adressen in allen von diesen Prozessoren bearbeiteten Vermittlungsbetriebsprogrammteilen zu verwenden, was die Erarbeitung und Pflege aller dieser Programmteile erleichtert, - und sie gestatten, lange Warteschlangen beim Zugriff eines zentralen Prozessors auf einen solchen Verwaltungsspeicher AV zu vermeiden.

In Normalbetriebszeiten speichern beide Hälften der gedoppelten Speicher, z.B. MB - auch AV und LMY, falls auch diese gedoppelt sind - fehlerüberwacht unter identischen Adressen im Regelfall identische Informationen, wobei als fehlerhaft erkannte gespeicherte Informationen im allgemeinen durch sukzessives Lesen aus der anderen, intakten Speicherhälfte und Kopieren der gelesenen intakten Informationen in die fehlerhafte Speicherhälfte korrigiert werden, z.B. besonders geschickt gemäß der bereits erwähnten Druckschrift EP-A2-141 245.

Das gezeigte Beispiel der Erfindung nutzt also solche gedoppelten Speicherabschnitte, bei denen in Normalbetriebszeiten, sobald durch die Fehlerüberwachung eine fehlerhafte Speicherung in der einen Speicherabschnittshälfte festgestellt wird, die intakte andere Speicherabschnittshälfte - und damit die in der intakten Speicherabschnittshälfte gespeicherten Informationen - alleine den Vermittlungsbetrieb übernehmen, bis in der fehlerhaft speichernden Speicherabschnittshälfte alle (teilweise oder völlig fehlerhaft) gespeicherten Informationen durch automatisches Kopieren aus der intakten Speicherabschnittshälfte korrigiert - evtl. auch aktualisiert - sind.

Bei einem Beispiel der Erfindung enthalten die dem Spezialrechner zugeteilten Speicherabschnitte jeweils eine Hälfte von einem ganzen Solchen, oder von mehreren solchen in sich gedoppelten Speicherblöcken MB und/oder LMY und/oder AV, oder jeweils auch nur - vielleicht sogar nur sehr kleine - Abschnitte davon. Zumindest enthält aber der dem Spezialrechner zugeteilte Speicherabschnitt stets einen oder mehrere Verwaltungsspeicher AV unabhängig davon, ob in der betreffenden Zentralsteuereinheit diese Verwaltungsspeicher AV jeweils gedoppelt sind oder nicht, und unabhängig davon, ob die ganze Zentralsteuereinheit viele oder nur wenige Verwaltungsspeicher AV enthält, also auch unabhängig davon, ob jeder Prozessor individuell einen eigenen Verwaltungsspeicher AV enthält. Falls alle Verwaltungsspeicher AV eines Erfindungsbeispiels ebenfalls in sich gedoppelt und EDC-überwacht sind sowie normalerweise bis auf einen tolerierbaren Schlupf mikrosynchron parallel betrieben werden, enthalten bei der Erfindung die Speicherabschnitte des Spezialrechners zumindest eine einzige abgespaltene Hälfte eines solchen Verwaltungsspeichers AV. - Die Hälften solcher gedoppelter Verwaltungsspeicher AV sind in der Figur jeweils mit AVa und AVb bezeichnet. Falls in der Sonderbetriebszeit solche gedoppelten Verwaltungsspeicher AVa/AVb gespalten werden, wird Jeweils die eine Hälfte dem Spezialrechner und die andere Hälfte der restlichen Zentralsteuereinheit zugeteilt.

Bevorzugterweise sind also auch diese Verwaltungsspeicherhälften AVa und AVb jeweils für sich EDC-überwacht und bis auf einen geringen tolerierbaren Schlupf gemäß der bereits genannten Druckschrift EP-A2-141 245 normalerweise mikrosynchron betrieben, wobei in Notfällen auch diese Speicher die in ihnen gespeicherten Informationen selbsttätig korrigieren. Auch bei solchen Verwaltungsspeicherhälften AVa, AVb kann, nach der Wiedervereinigung des Spezialrechners und der restlichen Zentralsteuereinheit, das ohnehin vorhandene selbsttätige Korrigierverfahren die in diesen Hälften AVa/AVb zunächst voneinander abweichende Informationen selbsttätig nachträglich wieder untereinander identisch machen, indem die Informationen der einen Hälfte, z.B. AVa, selbsttätig in die andere Hälfte, dann AVb, kopiert werden. Dieses selbsttätige Verfahren stellt also sicher, daß nach kurzer Zeit in den beiden wiedervereinigten Speicherhälften unter identischen Adressen stets identische Informationen gespeichert werden. In derselben Weise können nicht-identische Informationen in gedoppelten anderen Speichern, z.B. in MB3, nach der Wiedervereinigung selbsttätig untereinander identisch gemacht werden.

An diese Zentralsteuereinheit ist peripher eine Vielzahl von Bestandteilen des Vermittlungssystemes angeschlossen, also z.B. über eine Vielzahl von Eingabe-Ausgabe-Bussen B:IOC eine Vielzahl von Eingabe-Ausgabe-Prozessoren IOP, - an viele dieser Eingabe-Ausgabe-Prozessoren, vgl. IOP:MB, sind z.B. noch peripherer liegende Nachrichten-Zwischenspeicher (Message buffer) MBG angeschlossen, an welche wiederum (in der Figur nicht mehr gezeigt) noch peripherer liegende Vermittlungssystembestandteile, z.B. Koppelfeldabschnitte mit eigenen Großgruppen von Teilnehmeranschlüssen, angeschlossen sind.

Zur Bildung des Spezialrechners werden in den Spezialbetriebszeiten einige der Bestandteile der gezeigten Zentralsteuereinheit abgespalten, darunter eine Hälfte des gedoppelten Bussystems B: CMY, sowie ein Teil der Speicher CMY, LMY, AV - falls diese Speicher Jeweils gedoppelt sind, im allgemeinen nur eine abgespaltene Hälfte solcher gedoppelter Speicher. Der Spezialrechner kann also z.B. jeweils den ganzen Verwaltungsspeicher AV von mehreren Adressenverwaltungseinheiten bzw. von mehreren der Prozessoren BP, CP, IOC enthalten, zusammen mit z.B. einer Hälfte CMY1 des Hauptspeichers CMY oder nur z.B. der Hälfte MB3b des Speicherblockes MB3, vielleicht auch zusammen mit einem oder mehreren der lokalen Speicher LMY von einem oder mehreren der zentralen Prozessoren BP, CP und/oder IOC der Zentralsteuereinheit, oder auch nur Hälften solcher lokaler Speicher LMY. Hierbei werden abgespaltene Speicherabschnittshälften von gedoppelten Speicherabschnitten in Normalbetriebszeiten und in Übergangszeiten, also vor dem Abspalten und nach der Wiedervereinigung, bevorzugt gemäß der eingangs erwähnten Druckschrift EP-A2-141 246 betrieben.

Falls ein Speicherabschnitt nicht gedoppelt und EDC-überwacht normalerweise parallel betrieben wird, sind in der Zentralsteuereinheit im allgemeinen mindestens zwei verschiedene Speicher vorhanden, welche identische Informationen speichern, wobei der Inhalt des einen Speichers notfalls auch in den betreffenden anderen Speicher kopiert werden kann. Alle wichtigen Informationen sind also mindestens zweifach gespeichert. In Sonderbetriebszeiten werden also Speicherabschnitte zusammen mit einem oder mehreren der zentralen Prozessoren BP, CP, IOC - darunter mindestens einen Basisprozessor BP -, und zusammen mit einer Bussystemhälfte zu dem selbständig arbeitsfähigen Spezialrechner zusammengeschaltet. Die anderen Bestandteile der Zentralsteuereinheit, also die restliche Zentralsteuereinheit, steuert weiterhin den Vermittlungsbetrieb gemäß den bisherigen Vermittlungsbetriebsprogrammen. Der Spezialrechner enthält also z.B. die - sicherheitshalber sogar jeweils einzeln für sich EDC-überwachten - Bestandteile IOC1 und BP1 zusammen mit deren LMY und AV, ferner B:CMY1 und CMY1, eventuell noch einige der CP. Die im Spezialrechner enthaltenen Speicherabschnitte können durchwegs - oder zumindest teilweise - Hälften von gedoppelten Speicherabschnitten sein, also z.B. Hälften von gedoppelten Verwaltungsspeichern AV, Hälften von gedoppelten lokalen Speichern LMY und Hälften von gedoppelten Speicherblöcken MB des Hauptspeichers CMY. Der Spezialrechner enthält dann in seinen Speicherabschnitten stets alle wichtigsten Vermittlungsbetriebsprogrammteile der ganzen Zentralsteuereinheit. Bei der Erfindung kann jedoch ein Teil der Speicherabschnitte des Spezialrechners durch komplette lokale Speicher LMY, auch AV, der zentralen Prozessoren gebildet sein, besonders wenn der betreffende Prozessor ohnehin völlig zum Spezialrechner hinzugeschaltet wird. Weil die lokalen Speicher vgl. LMY der verschiedenen Prozessoren BP, CP, IOC ohnehin weitgehend oder völlig identische Vermittlungsprogrammteile enthalten, enthält auch bei dieser Konfiguration der Spezialrechnerspeicher in seinen verschiedenen Speicherabschnitten, wie oft gewünscht, weitgehend oder völlig die wichtigsten Vermittlungsprogrammteile der ganzen Zentralsteuereinheit, so daß im Spezialrechner beliebige Teile aller wichtigen Programmteile-modifiziert werden können. Gleichzeitig enthält aber ebenso die restliche Zentralsteuereinheit alle wichtigen Programmteile, so daß die restliche Zentralsteuereinheit alleine dem Vermittlungsbetrieb voll aufrechterhalten kann, und zwar gemäß den bisherigen unmodifizierten Programmteilen, obwohl der Spezialrechner abgespalten ist.

Diesem erfindungsgemäß betriebenen Spezialrechner können noch sonstige Bestandteile zugeteilt werden, z.B. die in der Figur gezeigte Operation-and-Maintenance-Station O&M zusammen mit einem zugeordneten Eingabe-Ausgabe-Prozessor IOP.

Bei der gezeigten Erfindung wird ausgenutzt, daß jeder der zentralen Prozessoren BP, CP, IOC - z.B. mittels der beliebig betätigbaren Schalter S und SW, oder mittels als solche Schalter dienender Eingabe-Ausgabe-Einheiten (IO-Units) S und SW - wahlweise Zugriff auf jede beliebige der beiden Hälften des Bussystemes B:CMY und auf jede beliebige der beiden Hälften eines jeden Speicherblockes MB hat. In diesem Spezialrechner wird also später eine Modifikation des bisher dort gespeicherten Teils des Vermittlungsbetriebsprogrammes eingegeben. Wegen dieser vor Ort, auch unmittelbar im Amtsgebäude, auslösbaren Abspaltung des Spezialrechners wird zum Modifizieren der betreffenden Daten kein zusätzlicher Support-Rechner mehr benötigt, was die Bedienung erheblich erleichtert.

Während der Spezialbetriebszeit enthält daher die restliche Zentralsteuereinheit im allgemeinen alle anderen, nichtabgespaltenen Speicherabschnitte, Prozessoren usw.. Sie enthält also z.B. die zentralen Prozessoren BP0, CP0...CP9, IOC0 (IOC2...), die Bussystemhälfte B:CMY0 und die Hälfte CMY1 des Hauptspeichers CMY, zusammen mit den Verwaltungsspeichern AV und lokalen Speichern LMY Jener Prozessoren BP0, CP0....CP9, IOC0....

Am Ende der Spezialbetriebszeit werden zumindest einige der wesentlichen Bestandteile des Spezialrechners, - darunter seine Speicherabschnitte, welche inzwischen die modifizierten Informationen enthält - wieder mit der restlichen Zentralsteuereinheit vereinigt, wonach, veranlaßt durch - z.B. über die O&M-Station eingegebene - entsprechende Weiterbetriebsbefehle, die wieder vereinigte - im allgemeinen nun komplette - Zentralsteuereinheit sofort entweder durch das bisherige unmodifizierte Vermittlungsbetriebsprogramm oder durch das modifizierte Vermittlungsbetriebsprogramm gesteuert wird. Es folgt nun eine Übergangszeit, nach deren Ende schließlich, wegen entsprechender Kopiermaßnahmen, wieder identische Informationen - also einheitlich wieder unmodifizierte, vorher schon gegebene, oder nun modifizierte Vermittlungsbetriebsprogramme - sowohl in den früheren Speicherabschnitten des Spezialrechners als auch in den früheren Speicherabschnitten der restlichen Zentralsteuereinheit gespeichert werden.

Die Erfindung ermöglicht also während des Vermittlungsbetriebs, vor Ort und ohne Supportrechner, eine extrem aufwandsarme rasche Erarbeitung der modifizierten Informationen trotz der damit verbundenen völligen Neustrukturierung der semipermanent gespeicherten Informationen, auch wenn diese Informationen jeweils sehr viele, z.B. gleichzeitig hunderte oder tausende, der Teilnehmeranschlüsse betreffen , und/oder ähnlich viele Vermittlungssystembestandteile betreffen. Die Erfindung ermöglicht außerdem eine sofortige Umschaltung der Zentralsteuereinheit auf die modifizierten Programme - vor allem weil bei der Erfindung zumindest teilweise auch semipermanent im Verwaltungsspeicher AVa/AVb gespeicherte Informationen modifiziert werden. Der Aufwand für solche Neustruktuierungen ist relativ klein, weil nahezu alle wichtigen Programmteile weiterhin ihre früher enthaltenen virtuellen Adressen behalten können - sie müssen also nicht mitmodifiziert werden, selbst wenn die physikalischen Speicherkapazitäten ganz stark verändert werden und die Informationen in sehr großen Speicherabschnitten, z.B. im ganzen Hauptspeicher CMY und in den lokalen Speichern LMY, ganz erheblich umstrukturiert werden. Die Erfindung eignet sich daher vor allem für Betriebsfälle, in denen die Vermittlungsbetriebsprogramme modifiziert werden sollen, weil die Anzahl der an die Nachrichten-Zwischenspeicher MBG angeschlossenen Teilnehmer, die Anzahl der zentralen Prozessoren BP, CP und/oder IOC, und/oder die Kapazitäten seiner Speicher CMY, LMY und/oder AVa/AVb extrem vergrößert oder verkleinert wurde, und/oder weil ab sofort zusätzliche Facilities und/oder sonstige Einrichtungen - z.B. die Möglichkeit des Bildfernsprechens und von sonstigen Bildübertragungen - allen angeschlossenen Teilnehmern angeboten werden sollen. Besonders wenn die schlagartige Umstellung vom alten auf den neuen modifizierten Vermittlungsbetrieb in einer Zeit mit wenig Vermittlungsbetrieb, also z.B. in bestimmten Stunden nachts, durchgefgührt wird, wird vorteilhafterweise hierbei die Bearbeitung von neu anfallenbden Vermittlungsaufträgen, Vermittlungsbetrieb, trotz der Vielzahl der betroffenen Teilnehmer/Systembestandteile/Speicherkapazitäten/Speicherplätze/Frequenzbandbreiten, kaum beeinträchtigt, auch wenn schlagartig der ganze Vermittlungsbetrieb von den bisherigen Informationen, also vom bisherigen beliebigen Programm, auf die neuen modifizierten Informationen, also auf das neue modifizierte beliebige Programm umgestellt wird. Auch die eigentliche Umschaltung der Zentralsteuereinheit auf das modifizierte Programm benötigt an sich nämlich z.B. nur die Dauer eines einzigen oder nur einiger weniger Maschinentakte der Zentralsteuereinheit, sobald die modifizierten Informationen eingegeben sind, wobei sofort (!) nach der Umschaltung, also lange vor dem Ende der Übergangszeit, die Zentralsteuereinheit den Vermittlungsbetrieb voll gemäß dem alten unmodifizierten, oder gemäß dem neuen modifizierten Vermittlungsprogramm bearbeitet - also ohne daß eine länger andauernde völlige Unterbrechung des Vermittlungsbetriebes nötig ist. Die Umschaltung ist also so rasch, daß die Verfügbarkeit des Vermittlungssystemes während der Umschaltung nur wenig gestört wird.

Überdies ist das gezeigte Beispiel des erfindungsgemäßen Verfahrens auch deswegen ganz besonders bedienungsfreundlich, nämlich sehr bequem handhabbar, weil nach der Wiedervereinigung des Spezialrechners mit der restlichen Zentralsteuereinheit die neuen, modifizierten Programmteile aus den früheren Speicherabschnitten des Spezialrechners in die früheren Speicherabschnitte der restlichen Zentralsteuereinheit auch selbsttätig sehr rasch und ohne Störung des Vermittlungsbetriebes kopiert werden können.

Die bei der Erfindung relativ problemlose Neustrukturierung der semipermanent gespeicherten Informationen kann also auch eine sehr starke Modifizierung der Struktur der physikalischen Adressen von einzuspeichernden Vermittlungsbetriebsdaten umfassen, und zwar gleichzeitig für viele Teilnehmer/Systembestandteile. Sie kann also z.B. eine gezielte Verkleinerung oder Vergrößerung von physikalischen Adreßräumen und/oder eine völlige Umadressierung derselben mitumfassen.

Die Neustruktuierung wird noch stärker dadurch erleichtert, wenn im abgespaltenen Spezialrechner zumindest ein Teil der in seinen Speicherabschnitten, z.B. MB3b/AVb, - z.B. semipermanent - gespeicherten Informationen sehr bedienungsfreundlich zunächst durch eine erste Sprachübersetzungseinheit in eine höhere Sprache - z.B. in eine höhere MML-Kommandosprache und/oder in eine höhere Programmiersprache wie CHILL und/oder in ein Flußdiagramm und/oder in eine Umgangssprache - übersetzt und an der O&M-Station O&M ausgegeben - z.B. ausgedruckt, aufgezeichnet und/oder angezeigt - wird. Diese erste Sprachübersetzungseinheit ist z.B. im zentralen Hauptspeicher CMY oder in der O&M-Station untergebracht. Danach werden über die O&M-Station O&M des Spezialrechners in dieser oder in einer anderen höheren Sprache die modifizierten, für einen späteren modifizierten Vermittlungsbetrieb in dem betreffenden Speicherabschnitt MB3b/AVb - z.B. semipermanent - zu speichernden Informationen eingegeben, z.B. unmittelbar über eine Tastatur oder in vorbereiteter Weise mittels eines Magnetbandes, genauer: mittels eines bei der O&M-Station angebrachten Magnetbandgerätes. Diese modifizierten Informationen werden laufend sofort, oder erst später, mittels der ersten oder mittels einer zweiten Sprachübersetzungseinheit in die Maschinensprache übersetzt und in den Speicherabschnitten MB3b/AVb des Spezialrechners gespeichert. Diese zweite Sprachübersetzungseinheit kann ebenfalls z.B. in der O&M-Station oder im zentralen Hauptspeicher CMY untergebracht sein.

Die Wiedervereinigung, welche durch einen entsprechenden, z.B. über die O&M-Station O&M eingegebenen Weiterbetriebsbefehl veranlaßt wird, wird z.B. mittels jener Eingabe-Ausgabe-Einheiten S und SW schlagartig erreicht, z.B. während der Dauer eines einzigen Maschinentaktes der Zentralsteuereinheit. Je nachdem, welcher Weiterbetriebsbefehl über die O&M-Station eingegeben wird, werden ab der Wiedervereinigung überdies nur die entsprechenden Speicherabschnitte, aber nicht die "falschen" Speicherabschnitte, aktiviert, wodurch je nach Wunsch - also je nach Art des eingegebenen Weiterbetriebsbefehls - sofort alle nun anfallenden Vermittlungsaufträge entweder gemäß dem alten unmodifizierten oder gemäß dem neuen modifizierten Vermittlungsprogramm bearbeitet werden. Dementsprechend wird sofort nach der Wiedervereinigung die Zentralsteuereinheit - und damit der ganze Vermittlungsbetrieb - wunschgemäß zunächst entweder nur mittels der früheren Speicherabschnitte des Spezialrechners, also mittels der dort gespeicherten modifizierten Informationen des Vermittlungsbetriebsprogrammes weitergesteuert, oder nur mittels der früheren Speicherabschnitte der restlichen Zentralsteuereinheit, also mittels der alten unmodifizierten Informationen. Dies kann man erreichen, indem man den normalen Lese-Schreib-Betrieb zwischen diesen betreffenden Speicherabschnitten und den Prozessoren und sonstigen Systembestandteilen vorübergehend in besonderer Weise steuert: z.B. indem man die Signalausgänge der "falschen" Speicherabschnitte, welche in diesem Moment noch nicht die Zentralsteuereinheit weitersteuern sollen, zumindest während Lesevorgängen vorübergehend solange totlegt, bis die Informationen durch - bevorzugt selbsttätiges Kopieren - in den früheren Speicherabschnitten des Spezialrechners identisch sind den Informationen in den entsprechenden anderen, früheren Speicherabschnitten der restlichen Zentralsteuereinheit.

Im gezeigten Beispiel werden also bevorzugterweise die betreffenden "falschen" früheren Speicherabschnitte vorübergehend bevorzugt so betrieben, als ob in ihnen durch ihre EDC-Schaltung Fehler, also ungültige Informationen, festgestellt worden wären. Bevorzugterweise wird nämlich ein selbsttätiges Kopieren aller entsprechenden intakten Informationen aus dem aktivierten intakten Speicherabschnitt in den bisher "falsche" Informationen speichernden anderen früheren Speicherabschnitt ausgelöst, - wobei für die Steuerung des Vermittlungsbetriebes bis zum Abschluß dieses Kopierens zunächst nur der "richtige" intakte Speicherabschnitt alleine den Vermittlungsbetrieb übernimmt. In diesem Fall werden, bevorzugterweise in einer oder in mehreren kurzen Betriebspausen der jeweils betreffenden Bestandteile, in denen die Zentralsteuereinheit also die betreffenden Speicherabschnitte nicht zur Steuerung des Vermittlungsbetriebes benötigt, sukzessive die in der intakten Speicherabschnittshälfte gespeicherten Informationen mittels eines automatisch weiterschaltenden Adressengenerators gelesen und sofort jeweils unter derselben Adresse selbsttätig in den anderen "falschen" Speicherabschnitt kopiert, bis die Speicherinhalte beider Speicherabschnitte identisch sind. Danach werden diese beiden Speicherabschnitte gemeinsam wieder wie in Normalbetriebszeiten betrieben.

Bei der Erfindung kann man einen Teil der Informationen auch so modifizieren, daß sie einem neu angebotenem, eine Facility steuernden, im Prinzip beliebig langen Unterprogramm entsprechen. Besonders wenig Speicherbedarf trotz besonders wenig Bedienungsaufwand ist hierbei dann erreichbar, wenn man einen Teil der modifizierten Informationen so eingibt, daß sie jeweils Beginnadressen von die Facilities steuernden, ebenfalls eingegebenen Unterprogrammen entsprechen. Durch eine individuelle Zuordnung von - z.B. an die Einheiten MBG angeschlossenen - Teilnehmeranschlüssen zu solchen Beginnadressen kann jeweils individuell einzelnen solchen Teilnehmern der Zugriff zu diesen neu eingerichteten Facilities ermöglicht werden.

Im Folgenden werden anhand der Figur möglichst präzise und detailliert einige Beispiele der wichtigsten Maßnahmen und die dadurch jeweils erreichbaren Vorteile zusammengefaßt:
Bei der Erfindung handelt es sich um ein Verfahren zum Betrieb einer Multiprozessor-Zentralsteuereinheit eines Vermittlungssystemes. Die Zentralsteuereinheit enthält zumindest eine Vielzahl von zentralen Prozessoren BP, CP, IOC, ein Bussystem B:CMY und einen zentralen Hauptspeicher CMY. Die Prozessoren BP, CP, IOC, welche selbständig Vermittlungsaufträge von - z.B. über MBG angeschlossenen - Teilnehmern mittels ihnen individuell zugeordneten lokalen Speichern LMY, AV bearbeiten, sind parallel an das Bussystem B:CMY angeschlossen, ebenso der mit den Prozessoren BP, CP, IOC zusammenarbeitende Hauptspeicher CMY mit Blöcken MB. Die lokalen Speicher LMY, AV speichern Jeweils vor allem jene Programmteile, die der betreffende Prozessor BP, CP, IOC besonders oft und, besonders in Notfällen, besonders rasch benötigt und auf die er, ohne das Bussystem B:CMY und den Hauptspeicher CMY zu belegen, jeweils sofort zugreifen kann. Zumindest einer der Prozessoren, genannt Basisprozessor, z.B. BP0 und BP1, dient auch zum Abtrennen und zum Wiedervereinigen von Bestandteilen der Zentralsteuereinheit, wozu er z.B. Schalter bzw. Input-Output-Units S, SW verwendet. Zumindest ein Abschnitt MB von Speichern, und zwar zumindest ein Abschnitt des Hauptspeichers CMY, sowie das Bussystem B:CMY sind in redundanter Weise gedoppelt, so daß die Prozessoren BP, CP, IOC über Jede Bussystemhälfte B:CMY0, B:CMY1 Zugriff auf Hälften MB0a, MB1a, MB2a, MB3a, MB0b, MB1b, MB2b, MB3b solcher gedoppelter Hauptspeicherabschnitte MB, CMY haben. In Normalbetriebszeiten speichern die gedoppelten Speicherabschnitte MB, CMY identische Informationen - nämlich Daten und/oder Programmteile, welche Bestandteile und/oder Funktionen des Vermittlungssystemes und/oder Verbindungen betreffen - in einer an die Prozessoren BP, CP, IOC angepaßten Maschinensprache. In einer Spezialbetriebszeit, bevorzugt in Zeiten mit besonders wenig Vermittlungsbetrieb, werden Bestandteile, z.B. BP1, IOC1, B:CMY1, MB3b, der Zentralsteuereinheit durch zumindest einen Basisprozessor, z.B. BP1, abgespalten und zu einem Spezialrechner zusammengeschaltet. Dieser Spezialrechner enthält zumindest einen der Prozessoren, darunter zumindest einen Basisprozessor, z.B. BP1, sowie eine Bussystemhälfte, z.B. B:CMY1, und mehrere Speicherabschnitte -darunter die lokalen Speicher LMY, AV der zum Spezialrechner gehörenden Prozessoren BP1, IOC1, sowie zumindest eine abgespaltene Hälfte MB3b von gedoppelten Hauptspeicherabschnitten MB, wenn nicht sogar eine Hälfte CMY1 des ganzen Hauptspeichers CMY. Die vor der Spezialbetriebszeit angefallenen, sowie die in der Spezialbetriebszeit neu anfallenden Vermittlungsaufträge werden in der restlichen Zentralsteuereinheit gemäß dem bisherigen Vermittlungsbetriebsprogramm weiterbearbeitet, also in den restlichen Prozessoren, z.B. BP0, CP0...CP9, IOC0.... mit ihren lokalen Speichern LMY, AV, in der anderen Bussystemhälfte B:CMY0 und in den nicht-abgespaltenen Speicherabschnitten CMY0. Sowohl die Speicherabschnitte, z.B. CMY1, des Spezialrechners als auch die Speicherabschnitte der restlichen Zentralsteuereinheit enthalten zusätzlich jeweils zumindest einen Verwaltungsspeicher AV einer Adressenverwaltungseinheit, wobei der Verwaltungsspeicher AV jeweils zumindest einem der Prozessoren zur Umrechnung von virtuellen Adressen in physikalische Adressen dient. In der Spezialbetriebszeit werden modifizierte Informationen, also modifizierte Daten und/oder modifizierte Teile des Vermittlungsbetriebsprogrammes, über eine Anschlußeinheit O&M in Speicherabschnitte des Spezialrechners eingegeben. Hierbei wird das Vermittlungsbetriebsprogramm zumindest durch Neuzuordnen von Informationen zu Adreßräumen modifiziert und/oder durch Neustrukturieren von semipermanent in diesen Adreßräumen zu speichernden Informationen, wobei alle diese Informationen auch sehr viele, z.B. an MBG angeschlossene, Teilnehmeranschlüsse und/oder sehr viele Vermittlungssystembestandteile, z.B. MBG, IOP, betreffen können. Ein Teil der modifizierten Informationen wird über die Anschlußeinheit O&M nicht nur in Abschnitte des Hauptspeichers (z.B. in MB3b), sondern zumindest auch in Abschnitte der Verwaltungsspeicher AV des Spezialrechners eingegeben. Am Ende der Spezialbetriebszeit werden schlagartig zumindest wesentliche Bestandteile des Spezialrechners mit der restlichen Zentralsteuereinheit wiedervereinigt, wobei, spätestens nach einer an die Wiedervereinigung anschließenden Übergangszeit, alle Speicherabschnitte CMY, LMY, AV wieder voll wirksam wie in Normalbetriebszeiten arbeiten. - - Die bisher zusammengefaßten Maßnahmen gestatten, die hochkomplexe Zentralsteuereinheit, die möglichst fehlertolerant und hochverfügbar sein muß, so zu betreiben, daß das Vermittlungsbetriebsprogramm, ohne Unterbrechung des normalen vermittlungsbetriebes, mit relativ geringem Aufwand gleichzeitig für eine sehr hohe Anzahl von Teilnehmern und/oder Systembestandteilen ganz erheblich modifiziert werden kann - bei Bedarf auch "vor Ort", also im Gebäude des Vermittlungsamtes, und ohne Support-Rechner. Diese Maßnahmen gestatten ferner, daß diese Modifizierungen des Vermittlungsbetriebsprogrammes auch völlige Neustrukturierungen von semipermanent zu speichernden Informationen, d.h. von entsprechenden Programmteilen und/oder Daten, umfassen. Vor allem gestatten diese Maßnahmen auch, daß alle Vermittlungsbetriebsprogrammteile - sowohl die modifizierten als auch die unmodifizierten - virtuelle Adressen enthalten dürfen, die nicht mitmodifiziert werden müssen, sobald im Spezialrechner ein beliebig wichtiger, beliebig häufig benötigter, also an sich beliebiger Teil des Vermittlungsbetriebsprogrammes grundlegend modifiziert wird; hierbei müssen die virtuellen Adressen, die in unmodifizierten Programmteilen angegeben sind, sowie die virtuellen Adressen von Speicherplätzen, in denen unmodifizierte Programmteile gespeichert sind, nicht (!) mitmodifiziert werden.

Bei einer Weiterbildung der Erfindung wird die Zentralsteuereinheit nach der Wiedervereinigung nicht durch das modifizierte, sondern durch das alte unmodifizierte Vermittlungsbetriebsprogramm weitergesteuert. Nach der Speicherung der modifizierten Informationen in Speicherabschnitten CMY1, AV des Spezialrechners, wird zunächst die Funktionstüchtigkeit der modifizierten Informationen innerhalb des Spezialrechners getestet. Danach werden die getesteten - eventuell zusätzlich überarbeiteten - modifizierten Informationen in einem - z.B. in O&M angebrachten - Hintergrundspeicher, also z.B. auf einem Magnetband, zwischengespeichert, bevor der Spezialrechner mit der restlichen Zentralsteuereinheit wiedervereinigt wird. In der Übergangszeit, veranlaßt durch einen entsprechenden Weiterbetriebsbefehl, werden die Vermittlungsaufträge zunächst weiterhin mittels der früheren Speicherabschnitte CMY0, AV der restlichen Zentralsteuereinheit bearbeitet, bis die früheren Speicherabschnitte des Spezialrechners - in Betriebspausen der entsprechenden früheren Speicherabschnitte der restlichen Zentralsteuereinheit - mit den Informationen, welche in diesen früheren Speicherabschnitten der restlichen Zentralsteuereinheit gespeichert sind, selbsttätig überschrieben wurden, so daß die vor der Wiedervereinigung in die Speicherabschnitte des Spezialrechners eingeschriebenen modifizierten Informationen gelöscht oder überschrieben sind. - - Durch diese Weiterbildung kann ein getesteter modifizierter Teil des Vermittlungsbetriebsprogrammes mittels des abgespaltenen Spezialrechners auf Vorrat erarbeitet werden, um später damit den Vermittlungsbetrieb sofort modifizieren zu können - z.B. sobald die Kapazitäten des Hauptspeichers hardwaremäßig ausreichend vergrößert sind - oder um später das getestete modifizierte Vermittlungsbetriebsprogramm in eine andere, ähnlich aufgebaute Zentralsteuereinheit eines anderen Vermittlungsamtes einzuschreiben, das z.B. tausende von Kilometern entfernt ist.

Bei einer anderen Weiterbildung der Erfindung werden hingegen nach der Wiedervereinigung die neu anfallenden Vermittlungsaufträge gemäß dem modifizierten Vermittlungsbetriebsprogramm bearbeitet. Hierzu werden, veranlaßt durch einen entsprechenden Weiterbetriebsbefehl, in der Übergangszeit die neu anfallenden Vermittlungsaufträge zunächst nur von solchen Prozessoren, z.B. BP1, IOC1, bearbeitet, welche sofort Zugriff auf modifizierte Informationen enthaltende Verwaltungsspeicher AV haben, so daß diese Prozessoren BP1, IOC1 auch sofort die physikalischen Adressen jener Informationen feststellen können, welche zuletzt im Hauptspeicherabschnitt CMY1 des Spezialrechners gespeichert waren. Diese sofort zugreiffähigen Prozessoren BP1, IOC1 werden in der Übergangszeit zunächst noch nicht von den früheren Speicherabschnitten CMY0, AV der restlichen Zentralsteuereinheit mitgesteuert - z.B. durch vorübergehendes Totlegen der Signalausgänge aller Speicherabschnitte, vgl. CMY0, LMY, AV, welche noch nicht modifizierte Informationen speichern, und zwar zumindest während des Lesens. Danach werden die in den früheren Speicherabschnitten CMY1 bzw. LMY, AV des Spezialrechners gespeicherten modifizierten Informationen - in Betriebspausen der entsprechenden früheren Speicherabschnitte CMY0, LMY, AV der restlichen Zentralsteuereinheit - selbsttätig überschrieben mit jenen Informationen, welche in diesen früheren Speicherabschnitten CMY0, LMY, AV der restlichen Zentralsteuereinheit gespeichert sind. - - Durch diese Weiterbildung kann - besonders leicht in Zeiten mit relativ wenig Vermittlungsbetrieb, also z.B. nachts - der Vermittlungsbetrieb auf das neue, modifizierte Vermittlungsbetriebsprogramm sehr rasch und ohne Störung der Verfügbarkeit umgestellt werden, also z.B. während eines einzigen oder während wenigen, die Zentralsteuereinheit steuernden Maschinentakten. In der anschließenden Übergangszeit werden selbsttätig, rasch und ohne Beeinträchtigung des Vermittlungsbetriebes die Speicherinhalte der wiedervereinigten Speicherhälften identisch gemacht und deren normaler Parallelbetrieb rasch wieder ermöglicht.

Bei einer nächsten Weiterbildung der Erfindung ist allen Prozessoren BP, CP, IOC jeweils ein eigener Verwaltungsspeicher AV individuell zugeordnet. Schon in der Spezialbetriebszeit werden alle Verwaltungsspeicher AV des Spezialrechners mit allen modifizierten Informationen, welche sie später nach der Wiedervereinigung speichern sollen, beschrieben. In der Übergangszeit führen zunächst nur die vorher im Spezialrechner enthaltenen Prozessoren, z.B. BP1, IOC1, mit Hilfe ihrer Verwaltungsspeicher AV den Vermittlungsbetrieb durch. In der Übergangszeit werden nämlich die Verwaltungsspeicher AV der übrigen Prozessoren, vgl. BP0, CP0....CP9, IOC0...., zuerst mit den für sie bestimmten modifizierten Informationen beschrieben, bevor auch diese übrigen Prozessoren wieder voll wirksam Vermittlungsaufträge übernehmen. - - Durch diese Weiterbildung kann bei einer solchen Multiprozessor-Zentralsteuereinheit, welche stets hochverfügbar sein soll und daher große Harteschlangen beim Zugriff auf Verwaltungsspeicher möglichst vermieden werden sollen, eine sehr rasche Umstellung der Zentralsteuereinheit vom alten auf das modifizierte Vermittlungsbetriebsprogramm ohne Gefährdung der Verfügbarkeit des Vermittlungssystems erreicht werden, - und zwar selbst in Zeiten mit relativ starkem Vermittlungsbetrieb, wenn zunächst etliche der sonstigen zentralen Prozessoren dem Spezialrechner zugeteilt waren und wenn bereits vor der Wiedervereinigung alle lokalen Speicher der zum Spezialrechner gehörenden Prozessoren einschließlich aller ihrer Verwaltungsspeicherabschnitte mit den für sie bestimmten modifizierten Informationen beschrieben wurden.

Bei einer Weiterbildung hiervon enthalten zumindest viele der Prozessoren BP, CP, IOC eigene lokale Speicher LMY, welche - von Prozessor zu Prozessor identische - Programmteile zur Durchführung ihrer Vermittlungsaufträge speichern. In der Übergangszeit erhalten die vorher nicht im Spezialrechner enthaltenen Prozessoren, vgl. BP0, CP0....CP9, IOC0...., sofort - z.B. von dem vorher im Spezialrechner enthaltenen Basisprozessor BP1 - einen Anreiz, mittels eines in ihrem jeweiligen eigenen lokalen Speicher LMY gespeicherten Programmteiles modifizierte Informationen in den ihnen individuell zugeordneten Verwaltungsspeicher AV einzuschreiben. - - Durch diese zusätzliche Weiterbildung können zusätzlich die lokalen Verwaltungsspeicher aller vorher nicht zum Spezialrechner gehörenden Prozessoren bei der Wiedervereinigung automatisch mit den für sie bestimmten modifizierten Informationen geladen und damit aktualisiert werden, so daß rasch danach alle Prozessoren wieder voll für den Vermittlungsbetrieb verfügbar sind.

Bei einer Weiterbildung der Erfindung ist zusätzlich jedem Prozessor BP, CP, IOC ein eigener gedoppelter Verwaltungsspeicher AVa, AVb individuell zugeordnet. Der Spezialrechner enthält zusätzlich jeweils eine Hälfte aller Verwaltungsspeicher AVb aller Prozessoren BP, CP, IOC in seinen Speicherabschnitten CMY1, LMY, AVb. Vor der Wiedervereinigung werden alle im Spezialrechner enthaltenen Verwaltungsspeicher-Hälften AVb, aber nicht die anderen Hälften AVa dieser Verwaltungsspeicher AV, mit den für sie bestimmten, modifizierten Informationen geladen. In der Übergangszeit werden - in Betriebspausen der betreffenden Verwaltungsspeicher AVa, AVb - die Informationen, welche in der ersten Verwaltungsspeicher-Hälfte AVa - oder AVb - gespeichert sind und seit der Wiedervereinigung den Vermittlungsbetrieb steuern, auch in die zweite Verwaltungsspeicher-Hälfte AVb -oder AVa - selbsttätig eingeschrieben, bevor beide Verwaltungsspeicher-Hälften AVa, AVb jedes Prozessors BP, CP, IOC wieder voll wirksam wie in Normalbetriebszeiten arbeiten. Als zusätzliche Weiterbildung davon kann jedem Prozessor BP, CP, IOC auch ein eigener gedoppelter lokaler Speicher LMY, welcher mit den oft, und mit den in Notfällen sofort, benötigten Vermittlungsprogrammteilen beschrieben ist, zugeordnet werden. Der Spezialrechner enthält zusätzlich jeweils die eine Hälfte aller lokaler Speicher LMY aller Prozessoren BP, CP, IOC. Vor der Wiedervereinigung werden alle im Spezialrechner enthaltenen Hälften dieser lokalen Speicher LMY, aber nicht die anderen Hälften dieser lokalen Speicher LMY, mit den für sie bestimmten modifizierten Informationen geladen. In der Übergangszeit - in Betriebspausen der betreffenden Hälften - werden die Informationen, welche in der ersten Hälfte der lokalen Speicher LMY gespeichert sind und welche seit der Wiedervereinigung den Vermittlungsbetrieb steuern, auch in die jeweils entsprechende zweite Hälfte dieser lokalen Speicher LMY selbsttätig kopiert, bevor diese beiden Hälften der lokalen Speicher LMY der Prozessoren BP, CP, IOC wieder voll wirksam wie in Normalbetriebszeiten parallel arbeiten. - - Beide zuletzt genannten Weiterbildungen gestatten eine besonders rasche Umstellung der Zentralsteuereinheit wahlweise auf den alten oder auf den modifizierten Vermittlungsbetrieb trotz hoher Verfügbarkeit auch in Zeiten mit sehr starkem Vermittlungsbetrieb, - selbst wenn die endgültige Entscheidung, ob nach der Wiedervereinigung das alte oder das modifizierte Vermittlungsbetriebsprogramm wirken soll, erst knapp vor der Wiedervereinigung getroffen wird.

Bei einer Weiterbildung der Erfindung modifiziert zumindest ein Teil der in den Verwaltungsspeicher AV eingegebenen modifizierten Informationen die Größe des durch physikalische Adressen definierten Adreßraumes. - - Dies gestattet, mehr Facilities und/oder Sonderdienst-Einrichtungen als bisher, oder weniger Facilities/Sonderdienst-Einrichtungen als bisher - und/oder durch entsprechende Vergrößerung oder Verkleinerung des Hauptspeichers erheblich veränderte Kapazitäten des Hauptspeichers - sofort zur Verfügung zu stellen, und zwar selbst für eine hohe Vielzahl von Teilnehmern, auch wenn so erhebliche Änderungen ursprünglich nicht vorgesehen waren.

Bei einer Weiterbildung der Erfindung entspricht zumindest ein Teil der modifizierten Informationen einer für Teilnehmer neu eingerichteten Facility. - Zusätzlich dazu kann zumindest ein Teil der modifizierten Informationen den Beginnadressen von die Facility steuernden Unterprogrammen entsprechen. - - Diese Weiterbildungen gestatten jeweils, selbst längere Unterprogramme für neu angebotene Facilities auf sehr einfache Weise in die Zentralsteuereinheit einzugeben.

Bei einer anderen Weiterbildung der Erfindung enthält die Anschlußeinheit O&M des Spezialrechners einen externen, magnetisch aufgezeichnete modifizierte Informationen tragenden Datenträger. Die modifizierten Informationen werden von diesem Datenträger in Speicherabschnitte CMY1, LMY, AV des Spezialrechners eingeschrieben. - - Dadurch können vorbereitete modifizierte Informationen rasch in den abgespaltenen Spezialrechner eingegeben werden.

Bei einer Weiterbildung der Erfindung stellt die Anschlußeinheit O&M eine gedoppelte Bedienerstation O&M dar. Die modifizierten Informationen werden über eine abgespaltene Hälfte der Bedienerstation O&M in den Spezialrechner eingegeben. - - Diese Maßnahmen gestatten, in Sonderbetriebszeiten gleichzeitig einen normalen Operations-und-Wartungsdienst der restlichen Zentralsteuereinheit zusätzlich neben der Arbeit am Spezialrechner durchzuführen.

Bei einer Weiterbildung der Erfindung wird - noch vor dem Abspalten des Spezialrechners, oder erst nach dem Abspalten des Spezialrechners, jedoch noch vor der Wiedervereinigung - zumindest ein Teil der Informationen, welche im Verwaltungsspeicher AV des Spezialrechners und/oder in sonstigen Speicherabschnitten CMY1, LMY des Spezialrechners semipermanent gespeichert sind, durch eine erste - z.B. in CMY oder in O&M angebrachte - Sprachübersetzungseinheit in eine höhere Sprache übersetzt - z.B. in eine Kommandosprache wie MML und/oder in eine höhere Programmiersprache wie CHILL und/oder in eine Umgangssprache. Diese Übersetzung wird an der Anschlußeinheit O&M des Spezialrechners ausgegeben, z.B. angezeigt oder ausgedruckt oder auf einem Datenträger aufgezeichnet. In der Spezialbetriebszeit werden die modifizierten Informationen in derselben oder in einer anderen höheren Sprache über die Anschlußeinheit O&M in den Spezialrechner eingegeben und in der ersten oder in einer zweiten - z.B. in CMY angebrachten - sprachübersetzungseinheit in die Maschinensprache übersetzt und in den jeweils betreffenden Speicherabschnitten CMY1, LMY, ABb des Spezialrechners gespeichert. - - Diese Weiterbildungsmaßnahmen gestatten, die geistigen Anstrengungen bei der Arbeit am Spezialrechner erheblich zu vermindern.

Bei einer nächsten Weiterbildung der Erfindung enthält der Spezialrechner auch Speicherabschnitte der Hälften von - in redundanter Weise gedoppelten, peripher an die Zentralsteuereinheit angeschlossenen - Vermittlungssystembestandteilen, welche eigene, also dezentrale, Speicherabschnitte und eigene, also dezentrale, Prozessoren enthalten. - - Diese Weiterbildung gestattet, zusätzlich zu dem Betrieb der zentralen Prozessoren der Zentralsteuereinheit, nun auch den Betrieb der dezentralen Prozessoren zu modifizieren, welche in peripheren Systembestandteilen - also z.B. in Teilen des Koppelfeldes - angebracht sind, ohne den laufenden Vermittlungsbetrieb zu unterbrechen.

### Bezugszeichenliste

- AV: = Verwaltungsspeicher
- AVa, AVb: = Verwaltungsspeicher-Hälften
- B:CMY: = Bussystem
- B:IOC: = Eingabe-Ausgabe-Bus
- BP: = zentraler Prozessor (Basisprozessor)
- CMY: = Hauptspeicher
- CP: = zentraler Prozessor
- IOC: = zentraler Prozessor (Input-Output-Controller)
- IOP: = Eingabe-Ausgabe-Prozessor
- LMY: - lokaler Speicher
- MB: = Speicherblock
- MBG: = Nachrichtenzwischenspeicher (Massage buffer)
- O&M: = Anschlußeinheit (Operation & Maintenance)
- PU: = Prozessoreinheit
- S, SW: = Input-Output-Units/Schalter

## Patentansprüche

1. Verfahren zum Betrieb einer Multiprozessor-Zentralsteuereinheit eines Vermittlungssystemes,
wobei die Zentralsteuereinheit zumindest eine Vielzahl von zentralen Prozessoren (BP, CP, IOC), ein Bussystem (B:CMY) und einen zentralen Hauptspeicher (CMY) enthält,
wobei die Prozessoren (BP, CP, IOC), welche selbständig Vermittlungsaufträge von (z.B. über MBG angeschlossenen) Teilnehmern mittels ihnen (BP, CP, IOC) individuell zugeordneten lokalen Speichern (LMY, AV) bearbeiten, sowie der mit den Prozessoren (BP, CP, IOC) zusammenarbeitende Hauptspeicher (CMY mit Blöcken MB) parallel an das Bussystem (B:CMY) angeschlossen sind,
wobei die lokalen Speicher (LMY, AV) jeweils vor allem jene Programmteile speichern, die der betreffende Prozessor (BP, CP, IOC) besonders oft und, besonders in Notfällen, besonders rasch aufruft, ohne über das Bussystem (B:CMY) auf den Hauptspeicher (CMY) zugreifen zu müssen,
wobei zumindest einer der Prozessoren, genannt Basisprozessor (BP0, BP1), auch zum Abtrennen und zum Wiedervereinigen von Bestandteilen der Zentralsteuereinheit (z.B. mittels der Schalter bzw. Input-Output-Units S, SW) dient,
wobei zumindest ein Abschnitt (MB) von Speichern, und zwar zumindest des Hauptspeichers (CMY), sowie das Bussystem (B:CMY) in redundanter Weise gedoppelt sind, so daß die Prozessoren (BP, CP, IOC) über jede Bussystemhälfte (B:CMY0, B:CMY1) Zugriff auf Hälften (MB0a, MB1a, MB2a, MB3a, MB0b, MB1b, MB2b, MB3b) solcher gedoppelter Hauptspeicherabschnitte (MB, CMY) hat,
wobei in Normalbetriebszeiten die gedoppelten Speicherabschnitte (MB, CMY) identische Informationen - nämlich Daten und/oder Programmteile, welche Bestandteile und/oder Funktionen des Vermittlungssystemes und/oder Verbindungen betreffen - in einer an die Prozessoren (BP, CP, IOC) angepaßten Maschinensprache speichern,
wobei in einer Spezialbetriebszeit, bevorzugt in Zeiten mit besonders wenig Vermittlungsbetrieb, Bestandteile (z.B. BP1, IOC1, B:CMY1, MB3b) der Zentralsteuereinheit durch zumindest einen der Basisprozessoren (z.B. BP1) abgespalten und zu einem Spezialrechner zusammengeschaltet werden, welcher zumindest einen der Prozessoren, darunter zumindest einen Basisprozessor (BP1), sowie eine Bussystemhälfte (B:CMY1) und mehrere Speicherabschnitte enthält - darunter die lokalen Speicher (LMY, AV) der zum Spezialrechner gehörenden Prozessoren (BP1, IOC1) sowie zumindest eine abgespaltene Hälfte (MB3b) von gedoppelten Hauptspeicherabschnitten (MB),
wobei die vor der Spezialbetriebszeit angefallenen, sowie die in der Spezialbetriebszeit neu anfallenden Vermittlungsaufträge in der restlichen Zentralsteuereinheit gemäß dem bisherigen Vermittlungsbetriebsprogramm weiterbearbeitet werden, also in den restlichen Prozessoren (BP0, CP0...CP9, IOC0....), in der anderen Bussystemhälfte (B:CMY0) und in den nicht-abgespaltenen Speicherabschnitten (CMY0, und manche der LMY, AV),
wobei in der Spezialbetriebszeit modifizierte Informationen, also modifizierte Daten und/oder modifizierte Teile des Vermittlungsbetriebsprogrammes, über eine Anschlußeinheit (O&M) in Speicherabschnitte des Spezialrechners eingegeben werden,
wobei am Ende der Spezialbetriebszeit zumindest wesentliche Bestandteile des Spezialrechners mit der restlichen Zentralsteuereinheit wiedervereinigt werden, und
wobei, spätestens nach einer an die Wiedervereinigung anschließenden Übergangszeit, alle Speicherabschnitte (CMY, LMY, AV) wieder voll wirksam wie in Normalbetriebszeiten arbeiten,
**dadurch gekennzeichnet,**
daß in der Spezialbetriebszeit sowohl die Speicherabschnitte (z.B. CMY1) des Spezialrechners als auch die Speicherabschnitte der restlichen Zentralsteuereinheit jeweils zumindest einen Verwaltungsspeicher (AV) einer Adressenverwaltungseinheit mitenthalten, wobei der Verwaltungsspeicher (AV) jeweils zumindest einem der Prozessoren zur Umrechnung von virtuellen Adressen in physikalische Adressen dient, und
daß das Vermittlungsbetriebsprogramm modifiziert wird zumindest durch Neuzuordnen von semipermanent zu speichernden Informationen zu Adreßräumen sowie durch Neustrukturieren von semipermanent in diesen Adreßräumen zu speichernden Informationen, welche sehr viele (z.B. an MBG angeschlossene) Teilnehmeranschlüsse und/oder sehr viele Vermittlungssystembestandteile (z.B. MBG, IOP) betreffen,
indem ein Teil der modifizierten Informationen über die Anschlußeinheit (z.B. O&M) auch in Abschnitten von zumindest einem der Verwaltungsspeichers (AV), die dem Spezialrechner zugeordnet sind, eingegeben werden.

2. Verfahren nach Patentanspruch 1,
**dadurch gekennzeichnet,**
daß nach der Speicherung der modifizierten Informationen in Speicherabschnitten (CMY1, AV) des Spezialrechners zunächst die Funktionstüchtigkeit der modifizierten Informationen innerhalb des Spezialrechners getestet wird,
daß danach die getesteten - eventuell zusätzlich überarbeiteten - modifizierten Informationen in einem (z.B. in O&M angebrachten) Hintergrundspeicher, also z.B. auf einem Magnetband, zwischengespeichert werden, bevor der Spezialrechner mit der restlichen Zentralsteuereinheit wiedervereinigt wird,
daß in der Übergangszeit, veranlaßt durch einen entsprechenden Weiterbetriebsbefehl, die Vermittlungsaufträge zunächst weiterhin mittels der früheren Speicherabschnitte (CMY0, AV) der restlichen Zentralsteuereinheit bearbeitet werden, bis die früheren Speicherabschnitte (CMY1, manche der LMY, AV) des Spezialrechners - in Betriebspausen der entsprechenden früheren Speicherabschnitte (CMY0, restliche LMY, AV) der restlichen Zentralsteuereinheit - mit den Informationen, welche in diesen früheren Speicherabschnitten (CMY0, restliche LMY, AV) der restlichen Zentralsteuereinheit gespeichert sind, selbsttätig überschrieben wurden, so daß die vor der Wiedervereinigung in die Speicherabschnitte des Spezialrechners eingeschriebenen modifizierten Informationen gelöscht oder überschrieben sind.

3. Verfahren nach Patentanspruch 1,
**dadurch gekennzeichnet,**
daß nach der Wiedervereinigung die neu anfallenden Vermittlungsaufträge gemäß dem modifizierten Vermittlungsbetriebsprogramm bearbeitet werden,
indem, veranlaßt durch einen entsprechenden Weiterbetriebsbefehl, in der Übergangszeit die neu anfallenden Vermittlungsaufträge zunächst nur von solchen Prozessoren (BP1, IOC1) bearbeitet werden, welche sofort Zugriff auf modifizierte Informationen enthaltende Verwaltungsspeicher (AV) haben, so daß diese Prozessoren (BP1, IOC1) auch sofort die physikalischen Adressen jener Informationen feststellen können, welche zuletzt im Hauptspeicherabschnitt (CMY1) des Spezialrechners gespeichert waren,
indem diese sofort zugreiffähigen Prozessoren (BP1, IOC1) in der Übergangszeit zunächst noch nicht von den früheren Speicherabschnitten (CMY0, AV) der restlichen Zentralsteuereinheit mitgesteuert werden, - z.B. durch vorübergehendes Totlegen der Signalausgänge aller Speicherabschnitte, (CMY0, LMY, AV) , welche noch nicht modifizierte Informationen speichern, und zwar zumindest während des Lesens aus Speicherabschnitten (CMY, LMY, AV) - und
indem danach die in den früheren Speicherabschnitten (CMY1, manche der LMY, AV) des Spezialrechners gespeicherten modifizierten Informationen - in Betriebspausen der entsprechenden früheren Speicherabschnitte (CMY0, LMY, AV) der restlichen Zentralsteuereinheit - mit den Informationen, welche in diesen früheren Speicherabschnitten (CMY0, LMY, AV) der restlichen Zentralsteuereinheit gespeichert sind, selbsttätig überschrieben werden.

4. Verfahren nach Patentanspruch 3,
**dadurch gekennzeichnet,**
daß allen Prozessoren (BP, CP, IOC) jeweils ein eigener Verwaltungsspeicher (AV) individuell zugeordnet ist,
daß schon in der Spezialbetriebszeit alle Verwaltungsspeicher (AV) des Spezialrechners mit allen modifizierten Informationen, welche sie später nach der Wiedervereinigung speichern sollen, beschrieben werden, und
daß in der Übergangszeit zunächst nur die vorher im Spezialrechner enthaltenen Prozessoren (z.B. BP1, IOC1) mit Hilfe ihrer Verwaltungsspeicher (AV) den Vermittlungsbetrieb durchführen, und
daß in der Übergangszeit die Verwaltungsspeicher (AV) der übrigen Prozessoren (BP0, CP0....CP9, IOC0....) zuerst mit den für sie bestimmten modifizierten Informationen beschrieben werden, bevor auch diese übrigen Prozessoren wieder voll wirksam Vermittlungsaufträge übernehmen.

5. Verfahren nach Patentanspruch 4,
**dadurch gekennzeichnet,**
daß zumindest viele der Prozessoren (BP, CP, IOC) eigene lokale Speicher (LMY) enthalten, welche - in allen diesen Prozessoren identische - Programmteile zur Durchführung ihrer Vermittlungsaufträge speichern, und
daß in der Übergangszeit die vorher nicht im Spezialrechner enthaltenen Prozessoren (BP0, CP0....CP9, IOC0....) sofort - z.B. von dem vorher im Spezialrechner enthaltenen Basisprozessor (BP1) - einen Anreiz erhalten, mittels eines in ihrem jeweiligen lokalen Speicher (LMY) gespeicherten Programmteiles modifizierte Informationen in den ihnen individuell zugeordneten Verwaltungsspeichern (AV) einzuschreiben.

6. Verfahren nach Patentanspruch 2 oder 3,
**dadurch gekennzeichnet,**
daß jedem Prozessor (BP, CP, IOC) ein eigener gedoppelter Verwaltungsspeicher (AVa, AVb) individuell zugeordnet ist,
daß der Spezialrechner jeweils eine Hälfte aller Verwaltungsspeicher (AVb) aller Prozessoren (BP, CP, IOC) in seinen Speicherabschnitten (CMY1, LMY, AVb) mitenthält,
daß vor der Wiedervereinigung alle im Spezialrechner enthaltenen Verwaltungsspeicher-Hälften (AVb), aber nicht die anderen Hälften (AVa) dieser Verwaltungsspeicher (AV) , mit den für sie bestimmten modifizierten Informationen geladen werden, und
daß in der Übergangszeit - in Betriebspausen der betreffenden Speicher (AVa, AVb) - die Informationen, welche in der ersten Verwaltungsspeicher-Hälfte (AVa oder AVb) gespeichert sind und seit der Wiedervereinigung den Vermittlungsbetrieb steuern, auch in die zweite Verwaltungsspeicher-Hälfte (AVb oder AVa) selbsttätig eingeschrieben werden, bevor beide Verwaltungsspeicher-Hälften (AVa, AVb) jedes Prozessors (BP, CP, IOC) wieder voll wirksam wie in Normalbetriebszeiten arbeiten.

7. Verfahren nach Patentanspruch 6,
**dadurch gekennzeichnet,**
daß jedem Prozessor (BP, CP, IOC) auch ein eigener gedoppelter lokaler Speicher (LMY), welcher mit oft und mit in Notfällen sofort benötigten Vermittlungsprogrammteilen beschrieben ist, zugeordnet ist,
daß der Spezialrechner jeweils die eine Hälfte aller dieser lokaler Speicher (LMY) aller Prozessoren (BP, CP, IOC) mitenthält,
daß vor der Wiedervereinigung alle im Spezialrechner enthaltenen Hälften dieser lokalen Speicher (LMY), aber nicht die anderen Hälften dieser lokalen Speicher (LMY), mit den für sie bestimmten modifizierten Informationen geladen werden, und
daß in der Übergangszeit - in Betriebspausen der betreffenden Hälften - die Informationen, welche in der ersten Hälfte der lokalen Speicher (LMY) gespeichert sind und welche seit der Wiedervereinigung den Vermittlungsbetrieb steuern, auch in die jeweils entsprechende zweite Hälfte dieser lokalen Speicher (LMY) selbsttätig kopiert werden, bevor diese beiden Hälften der lokalen Speicher (LMY) der Prozessoren (BP, CP, IOC) wieder voll wirksam wie in Normalbetriebszeiten parallel arbeiten.

8. Verfahren nach einem der vorhergehenden Patentansprüche,
**dadurch gekennzeichnet,**
daß zumindest ein Teil der in den Verwaltungsspeicher (AV) eingegebenen modifizierten Informationen die Größe des durch physikalische Adressen definierten Adreßraumes modifiziert.

9. Verfahren nach einem der vorhergehenden Patentansprüche,
**dadurch gekennzeichnet,**
daß zumindest ein Teil der modifizierten Informationen einer für Teilnehmer neu eingerichteten Facility entspricht.

10. Verfahren nach Patentanspruch 9,
**dadurch gekennzeichnet,**
daß zumindest ein Teil der modifizierten Informationen den Beginnadressen von die Facility steuernden Unterprogrammen entspricht.

11. Verfahren nach einem der vorhergehenden Patentansprüche,
**dadurch gekennzeichnet,**
daß die Anschlußeinheit (O&M) des Spezialrechners einen externen, magnetisch aufgezeichnete modifizierte Informationen tragenden Datenträger enthält, und
daß die modifizierten Informationen von diesem Datenträger in Speicherabschnitte (CMY1, LMY, AV) des Spezialrechners eingeschrieben werden.

12. Verfahren nach einem der vorhergehenden Patentansprüche,
**dadurch gekennzeichnet,**
daß die Anschlußeinheit (O&M) eine gedoppelte Bedienerstation (O&M) darstellt, und
daß die modifizierten Informationen über eine abgespaltene Hälfte der Bedienerstation (O&M) in den Spezialrechner eingegeben werden.

13. Verfahren nach einem der vorhergehenden Patentansprüche,
**dadurch gekennzeichnet,**
daß noch vor dem Abspalten des Spezialrechners, oder erst nach dem Abspalten des Spezialrechners, jedoch noch vor der Wiedervereinigung, zumindest ein Teil der Informationen, welche im Verwaltungsspeicher (AV) des Spezialrechners und/oder in sonstigen Speicherabschnitten (CMY1, LMY) des Spezialrechners semipermanent gespeichert sind, durch eine erste (z.B. in CMY oder in O&M angebrachte) Sprachübersetzungseinheit in eine höhere Sprache - z.B. in eine Kommandosprache wie MML und/oder in eine höhere Programmiersprache wie CHILL und/oder in eine Umgangssprache - übersetzt wird und an der Anschlußeinheit (O&M) des Spezialrechners ausgegeben wird, z.B. angezeigt oder ausgedruckt oder auf einem Datenträger aufgezeichnet wird, und
daß in der Spezialbetriebszeit die modifizierten Informationen in derselben oder in einer anderen höheren Sprache über die Anschlußeinheit (O&M) in den Spezialrechner eingegeben und in der ersten oder in einer zweiten (z.B. in CMY angebrachten) Sprachübersetzungseinheit in die Maschinensprache übersetzt und in den jeweils betreffenden Speicherabschnitten (CMY1, LMY, AVb) des Spezialrechners gespeichert werden.

14. Verfahren nach einem der vorhergehenden Patentansprüche,
**dadurch gekennzeichnet,**
daß in der Spezialbetriebszeit Speicherabschnitte der Hälften von in redundanter Weise gedoppelten, peripher an die Zentralsteuereinheit angeschlossenen Vermittlungssystembestandteilen, welche eigene, also dezentrale, Speicherabschnitte und eigene Prozessoren enthalten, im Spezialrechner mitenthalten sind.

## Claims

1. Process for operating a multiprocessor central control unit of a switching system,
in which the central control unit contains at least a plurality of central processors (BP, CP, IOC), a bus system (B:CMY), and a central main memory (CMY),
in which the processors (BP, CP, LOG), which independently process switching jobs from subscribers (connected via MBG for example) by means of local memories (LMY, AV) individually assigned to them (BP, CP, IOC), and also the main memory (CMY with blocks MB) cooperating with the processors (BP, CP, IOC) are connected in parallel to the bus system (B:CMY),
in which the local memories (LMY, AV) primarily store in each case the program parts which the respective processor (BP, CP, IOC) calls particularly frequently and, especially in emergencies, particularly quickly without having to access the main memory (CMY) via the bus system (B:CMY),
in which at least one of the processors, termed the basic processor (BP0, BP1), also serves to disconnect and reconnect components of the central control unit (for example by means of the switches or input-output units S, SW),
in which at least one section (MB) of memories, to be precise at least of the main memory (CMY), and also the bus system (B:CMY) are duplicated in a redundant fashion, so that the processors (BP, CP, IOC) have access to halves (MB0a, MB1a, MB2a, MB3a, MB0b, MB1b, MB2b, MB3b) of such duplicated main memory sections (MB, CMY) via each bus system half (B:CMY0, B:CMY1),
in which during normal mode periods the duplicated memory sections (MB, CMY) store identical information - namely data and/or program parts relating to components and/or functions of the switching system and/or connections - in a machine language adapted to the processors (BP, CP, IOC),
in which during a special mode period, preferably at a time when there are particularly few switching operations, components (e.g. BP1, IOC1, B:CMY1, MB3b) of the central control unit are split off by at least one of the basic processors (e.g. BP1) and are interconnected to form a special computer containing at least one of the processors, including at least one basic processor (BP1), as well as one bus system half (B:CMY1) and a plurality of memory sections - including the local memories (LMY, AV) of the processors (BP1, IOC1) belonging to the special computer, and also at least one split off half (MB3b) of duplicated main memory sections (MB),
in which the switching jobs that occurred before the special mode period, and also the new switching jobs occurring during the special mode period in the rest of the central control unit are processed further according to the switching program used hitherto, that is to say in the remaining processors (BP0, CP0...CP9, IOC0....), in the other bus system half (B:CMY0) and in the memory sections (CMY0, and some of LMY, AV) that have not been split off,
in which during the special mode period modified information, that is to say modified data and/or modified parts of the switching program, are entered in memory sections of the special computer via an interface unit (O&M),
in which at the end of the special mode period at least essential components of the special computer are reconnected to the rest of the central control unit, and in which, at the latest after a transition period following the reconnection, all memory sections (CMY, LMY, AV) are again fully operational as in normal mode periods, characterised
in that during the special mode period both the memory sections (e.g. CMY1) of the special computer and the memory sections of the rest of the central control unit also contain in each case at least one management memory (AV) of an address management unit, the management memory (AV) serving in each case at least one of the processors to convert virtual addresses into physical addresses, and in that the switching program is modified at least by reassignment of information to be stored semi-permanently to address spaces as well as by restructuring of information to be stored semi-permanently in said address spaces which relates to a large number of subscriber lines (connected to MBG for example) and/or a large number of switching system components (e.g. MBG, IOP), in that part of the modified information is entered via the interface unit (e.g. O&M) also into sections of at least one of the management memories (AV) assigned to the special computer.

2. Process according to Patent Claim 1, characterised
in that after the modified information has been stored in memory sections (CMY1, AV) of the special computer, first of all the functionality of the modified information is tested within the special computer,
in that following this the tested - possibly additionally revised - modified information is temporarily stored in a background memory (accommodated in O&M for example), that is to say on a magnetic tape for example, before the special computer is reconnected to the rest of the central control unit,
in that during the transition period, triggered by a corresponding further processing command, the switching jobs at first continue to be processed by means of the earlier memory sections (CMY0, AV) of the rest of the central control unit until the earlier memory sections (CMY1, some of LMY, AV) of the special computer - in operating breaks of the corresponding earlier memory sections (CMY0, rest of LMY, AV) of the rest of the central control unit - were automatically overwritten by the information stored in said earlier memory sections (CMY0, rest of LMY, AV) of the rest of the central control unit, so that the modified information written into the memory sections of the special computer before the reconnection is deleted or overwritten.

3. Process according to Patent Claim 1, characterised
in that after the reconnection, the new switching jobs occurring are processed according to the modified switching program,
in that, triggered by a corresponding further processing command, during the transition period the new switching jobs occurring are initially processed only by processors (BP1, IOC1) that have immediate access to management memories (AV) containing modified information, so that said processors (BP1, IOC1) can also immediately determine the physical addresses of the information that was last stored in the main memory section (CMY1) of the special computer,
in that during the transition period said processors (BP1, IOC1) with immediate access are initially not yet co-controlled by the earlier memory sections (CMY0, AV) of the rest of the central control unit - for example by temporary inhibition of the signal outputs of all memory sections (CMY0, LMY, AV) storing as yet unmodified information, to be precise at least during the reading out from memory sections (CMY, LMY, AV), and
in that after that the modified information stored in the earlier memory sections (CMY1, some of LMY, AV) of the special computer - in operating breaks of the corresponding earlier memory sections (CMY0, LMY, AV) of the rest of the central control unit - is automatically overwritten by the information stored in said earlier memory sections (CMY0, LMY, AV) of the rest of the central control unit.

4. Process according to Patent Claim 3, characterised
in that a separate management memory (AV) is individually assigned to all processors (BP, CP, IOC) in each case, in that already during the special mode period all management memories (AV) of the special computer are written with all modified information which they are to store later after the reconnection, and
in that during the transition period initially only the processors (e.g. BP1, IOC1) contained previously in the special computer execute the switching operations with the aid of their management memories (AV), and
in that during the transition period the management memories (AV) of the remaining processors (BP0, CP0....CP9, IOC0....) are first written with the modified information intended for them before these remaining processors also become fully operational again and accept switching jobs.

5. Process according to Patent Claim 4, characterised
in that at least a large number of the processors (BP, CP, IOC) contain their own local memories (LMY) which store - identical in all said processors - program parts for executing their switching jobs, and
in that during the transition period the processors (BP0, CP0....CP9, IOC0....) previously not contained in the special computer are immediately triggered - by a basic processor (BP1) previously contained in the special computer for example - to write modified information into the management memories (AV) individually assigned to them by means of a program part stored in their respective local memory (LMY).

6. Process according to Patent Claim 2 or 3, characterised
in that a separate duplicated management memory (AVa, AVb) is individually assigned to each processor (BP, CP, IOC),
in that the special computer also contains in each case one half of all management memories (AVb) of all processors (BP, CP, IOC) in its memory sections (CMY1, LMY, AVb),
in that before the reconnection all management memory halves (AVb) contained in the special computer, but not the other halves (AVa) of said management memories (AV), are loaded with the modified information intended for them, and
in that during the transition period - during operating breaks of the respective memories (AVa, AVb) - the information which is stored in the first management memory half (AVa or AVb) and which controls the switching operations since the reconnection, is also written automatically into the second management memory half (AVb or AVA) before both management memory halves (AVa, AVb) of each processor (BP, CP, IOC) are again fully operational as in normal mode periods.

7. Process according to Patent Claim 6, characterised
in that a separate duplicated local memory (LMY) which is written with switching program parts required frequently and in emergencies is assigned to each processor (BP, CP, IOC),
in that the special computer also contains in each case one half of all said local memories (LMY) of all processors (BP, CP, IOC),
in that before the reconnection all halves of said local memories (LMY) contained in the special computer, but not the other halves of said local memories (LMY), are loaded with the modified information intended for them, and
in that during the transition period - during operating breaks of the respective halves - the information which is stored in the first half of the local memories (LMY) and which controls the switching operations since the reconnection, is also copied automatically into the respective second half of said local memories (LMY) before said two halves of the local memories (LMY) of the processors (BP, CP, IOC) are again fully operational in parallel as in normal mode periods.

8. Process according to one of the preceding patent claims, characterised in that at least a part of the modified information entered in the management memory (AV) modifies the size of the address space defined by physical addresses.

9. Process according to one of the preceding patent claims, characterised in that at least a part of the modified information corresponds to a new facility set up for subscribers.

10. Process according to Patent Claim 9, characterised in that at least a part of the modified information corresponds to the start addresses of the sub-programs controlling the facility.

11. Process according to one of the preceding patent claims, characterised
in that the interface unit (O&M) of the special computer contains an external data carrier that carries magnetically recorded modified information, and
in that the modified information is written by said data carrier into memory sections (CMY1, LMY, AV) of the special computer.

12. Process according to one of the preceding patent claims, characterised
in that the interface unit (O&M) represents a duplicated operator station (O&M), and
in that the modified information is entered into the special computer via a split off half of the operator station (O&M).

13. Process according to one of the preceding claims, characterised
in that even before the splitting off of the special computer, or only after the splitting off of the special computer but still before the reconnection, at least a part of the information stored semi-permanently in the management memory (AV) of the special computer and/or in other memory sections (CMY1, LMY) of the special computer is translated by a first language translation unit (accommodated in CMY or in O&M for example) into a higher-level language - for example into a command language such as MML and/or into a higher-level programming language such as CHILL and/or into natural language - and output to the interface unit (O&M) of the special computer, for example displayed or printed out or recorded on a data carrier, and
in that during the special mode period the modified information is entered in the same or in another higher-level language into the special computer via the interface unit (O&M), and is translated in the first or in a second language translation unit (accommodated in CMY for example) into the machine language and is stored in the respective memory sections (CMY1, LMY, AVb) of the special computer in each case.

14. Process according to one of the preceding patent claims, characterised in that during the special mode period the special computer also contains memory sections of the halves of switching system components which are duplicated in a redundant fashion, are connected peripherally to the central control unit, and which contain their own, that is to say decentralised, memory sections and own processors.

## Revendications

1. Procédé pour la mise en oeuvre d'une unité de commande centrale à multiprocesseurs d'un système de commutation, selon lequel
l'unité de commande centrale comporte au moins une multiplicité de processeurs centraux (BP,CP,IOC), un système de bus (B:CMY) et une mémoire principale centrale (CMY),
les processeurs (BP,CP,IOC), qui traitent automatiquement des ordres de commutation d'abonnés (raccordés par exemple par l'intermédiaire de MBG) au moyen de mémoires locales (LMY,AV), qui sont associées individuellement à ces processeurs (BP,CP,IOC), ainsi que la mémoire principale (CMY comportant des blocs MB), qui coopèrent avec les processeurs (BP,CP,IOC), sont raccordés en parallèle au système de bus (B:CMY),
les mémoires locales (LMY,AV) mémorisent respectivement, avant tout, les parties du programme que le processeur considéré (BP,CP,IOC) appelle particulièrement fréquemment et, en particulier, dans des cas d'urgence, particulièrement rapidement, sans qu'il faille accéder à la mémoire principale (CMY) par l'intermédiaire du système de bus (B:CMY),
au moins l'un des processeurs, désignés sous le terme de processeur de base (BPO,BP), sert également à séparer et réunir à nouveau des parties de l'unité de commande centrale (par exemple au moyen des interrupteurs ou unités d'entrée-sortie S, SW),
au moins une section (MB) de mémoires, et ce au moins de la mémoire principale (CMY), ainsi que le système de bus (B:CMY), sont couplés de façon redondante de sorte que les processeurs (BP,CP,IOC) ont accès, par l'intermédiaire de chaque moitié (B:CMY0; B:CMY1) du système de bus, à des moitiés (MB0a, MB1a, MB2a, MB3a, MB0b, MB1b, MB2b, MB3b) de telles sections doublées (MB, CMY) de la mémoire principale,
pendant les temps de fonctionnement normal, les sections doublées (MB,CMY) de la mémoire mémorisent des informations identiques - à savoir des données et/ou des parties de programme qui concernent des éléments constitutifs et/ou des fonctions du système de commutation et/ou des liaisons - dans un langage machine adapté aux processeurs (BP,CP,IOC),
pendant une durée de fonctionnement particulière, de préférence pendant des intervalles de temps où les opérations de commutation sont particulièrement peu nombreuses, des éléments constitutifs (par exemple BP1, IOC1, B:CMY1, B3b) de l'unité de commande centrale sont séparés par au moins l'un des processeurs de base (par exemple BP1) et sont interconnectés à un calculateur spécial, qui comporte au moins l'un des processeurs, et parmi ces derniers au moins un processeur de base (BP1), ainsi qu'une moitié (B:CMY1) du système de bus et plusieurs sections de mémoire - parmi ces dernières les mémoires locales (LMY, AV) des processeurs (BP1, IOC1) associés au calculateur spécial, ainsi qu'au moins une moitié séparée (MB3b) de sections doublées (MB) de la mémoire principale,
les ordres de commutation qui sont arrivés avant la durée de fonctionnement spécial, ainsi que les ordres de commutation qui arrivent nouvellement pendant la durée de fonctionnement spécial, continuent à être traités dans l'unité de commande centrale restante, conformément au programme de fonctionnement de commutation jusqu'alors présent, c'est-à-dire dans les processeurs restants (BP0, CPO...CP9, LOCO...), dans l'autre moitié (B:CMY) du système de bus et dans les sections de mémoire non séparées ((CMYO et un grand nombre de LMY, AV),
pendant la durée de fonctionnement spécial, des informations modifiées, c'est-à-dire des données modifiées et/ou des parties modifiées du programme de fonctionnement de commutation sont introduites, par l'intermédiaire d'une unité de raccordement (O&M), dans des sections de mémoire du calculateur spécial,
à la fin de la durée de fonctionnement spécial, au moins des éléments constitutifs importants du calculateur spécial sont à nouveau réunis à l'unité de commande centrale restante, et
au plus tard après une période transitoire, qui succède à la nouvelle réunion, toutes les sections de mémoire (CMY, LMY, AV) travaillent à nouveau d'une manière entièrement efficace, comme pendant les durées de fonctionnement normal,
caractérisé par le fait
que pendant la durée de fonctionnement spécial, aussi bien la section de mémoire (par exemple CMY1) du calculateur spécial que les sections de mémoire de l'unité de commande centrale restante comportent respectivement et simultanément au moins une mémoire de gestion (AV) d'une unité de gestion d'adresses, la mémoire de gestion (AV) étant utilisée respectivement au moins par l'un des processeurs pour convertir des adresses virtuelles en des adresses physiques, et
que le programme de fonctionnement de commutation est modifié au moins par une nouvelle association d'informations devant être mémorisées de façon semi-permanente, à des espaces d'adresses ainsi que par une restructuration d'informations devant être mémorisées de façon semi-permanente dans ces espaces d'adresses et qui concernent de très nombreux postes d'abonnés (par exemple raccordés à MBG) et/ou de très nombreux éléments constitutifs du système de commutation (par exemple MBG, IOP),
par le fait qu'une partie des informations modifiées est introduite par l'intermédiaire de l'unité de raccordement (par exemple O&M) également dans des sections d'au moins l'une des mémoires de gestion (AV) qui sont associées au calculateur spécial.

2. Procédé suivant la revendication 1, caractérisé par le fait
qu'après la mémorisation des informations modifiées dans des sections de mémoire (CMY1,AV) du calculateur spécial, tout d'abord l'aptitude au fonctionnement des informations modifiées est testée à l'intérieur du calculateur spécial,
qu'ensuite les informations testées et modifiées - éventuellement remaniées en supplément - sont mémorisées temporairement dans une mémoire secondaire (disposée par exemple dans O&M), c'est-à-dire par exemple sur une bande magnétique, avant que le calculateur spécial soit à nouveau réuni à l'unité de commande centrale restante,
que pendant la durée transitoire, les ordres de commutation sont tout d'abord traités au moyen des sections antérieures de mémoire (CMY,AV) de l'unité de commande centrale restante, d'une manière déclenchée par un ordre correspondant de remise en fonctionnement, jusqu'à ce qu'un enregistrement en surinscription ait été réalisé automatiquement dans les sections antérieures de mémoire (CMY1, un grand nombre des sections LMY, AV du calculateur spécial) pendant des pauses de fonctionnement des sections antérieures de mémoire correspondantes (CMY0, sections LMY, AV restantes) de l'unité de commande centrale restante - avec les informations qui sont mémorisées dans ces sections antérieures de mémoire (CMY0, sections LMY, AV restantes) de l'unité de commande centrale restante, de sorte que les informations modifiées, enregistrées avant la réunification dans les sections de mémoire du calculateur spécial, sont effacées ou qu'un enregistrement en surinscription est effectué sur ces informations.

3. Procédé suivant la revendication 1, caractérisé par le fait qu'après la réunification, les ordres de commutation nouvellement arrivants sont traités conformément au programme modifié de fonctionnement de commutation,
par le fait que, d'une manière déclenchée par une instruction correspondante de remise en service, pendant la période transitoire les ordres de commutation nouvellement arrivants sont traités tout d'abord uniquement par des processeurs (BP1, IOC1) qui ont immédiatement accès à des mémoires de gestion (AV) contenant des informations modifiées, de sorte que ces processeurs (BP1, IOC1), peuvent également déterminer immédiatement les adresses physiques des informations qui ont été mémorisées en dernier lieu pendant la section (CMY1) de la mémoire principale du calculateur spécial,
par le fait que ces processeurs (BP1, IOC1), qui sont immédiatement aptes à réaliser un accès, ne sont pas tout d'abord commandés, pendant la période transitoire, par les sections antérieures de mémoire (CMY0, AV) de l'unité de commande centrale restante, - par exemple par l'interruption transitoire du fonctionnement des sorties des signaux de toutes les sections de mémoire (CMY0, LMY, AV), qui mémorisent des informations non encore modifiées, et ce au moins pendant la lecture exécutée à partir des sections de mémoire (CMY, LMY, AV), et
par le fait qu'ensuite un enregistrement en surinscription est exécuté automatiquement sur les informations modifiées mémorisées dans les sections antérieures de mémoire (CMY1, un grand nombre des sections LMY, AV) du calculateur spécial - pendant les pauses de fonctionnement des sections antérieures de mémoire (CMY0, LMY, AV de l'unité de commande centrale restante) - avec les informations qui sont mémorisées pendant ces sections antérieures de mémoire (CMY0, LMY, AV) de l'unité de commande centrale restante.

4. Procédé suivant la revendication 3, caractérisé par le fait
que respectivement une mémoire particulière de gestion (AV) est associée individuellement à tous les processeurs (BP, CP, IOC),
que déjà pendant la durée de fonctionnement spéciale, un enregistrement est exécuté dans toutes les mémoires de gestion (AV) du calculateur spécial, avec toutes les informations modifiées qui doivent être mémorisées ultérieurement après la réunion à nouveau opérée, et
que pendant la période transitoire, seuls les processeurs (par exemple BP1, IOC1) contenus auparavant dans le calculateur spécial exécutent l'opération de commutation, à l'aide de leurs mémoires de gestion (AV), et
que pendant la période transitoire, un enregistrement est tout d'abord exécuté dans les mémoires de gestion (AV) des autres processeurs (BP0, CPO...CP9, IOC0...), avec les informations modifiées, qui leur sont destinées, avant que ces autres processeurs prennent en charge à nouveau et d'une manière totalement efficace, des ordres de commutation.

5. Procédé suivant la revendication 4, caractérisé par le fait
qu'au moins un grand nombre des processeurs (BP,CP, IOC) comportent des mémoires locales particulière (LMY), qui mémorisent des éléments de programme - identiques dans tous ces processeurs - pour l'exécution de leurs ordres de commutation, et
que pendant la période transitoire, les processeurs (BP0, CP0, CP9, IOC0...), qui n'étaient pas contenus auparavant dans le calculateur spécial, reçoivent immédiatement - par exemple de la part du processeur de base (BP1) contenu auparavant dans le calculateur spécial - une incitation pour enregistrer des informations modifiées dans les mémoires de gestion (AV) qui leur sont associées individuellement, au moyen d'une partie de programme mémorisée dans leur mémoire locale respective (LMY).

6. Procédé suivant la revendication 2 ou 3, caractérisé par le fait
qu'à chaque processeur (BP, CP, IOC) est associée individuellement une mémoire de gestion particulière doublée (AVa, AVb),
que le calculateur spécial comporte simultanément respectivement une moitié de toutes les mémoires de gestion (AVb) de tous les processeurs (BP,CP,IOC) dans ses sections de mémoire (CMY1,LMY,AVb),
qu'avant la réunification, toutes les moitiés (AVb) de la mémoire de gestion, qui sont contenues dans le calculateur spécial, mais pas les autres moitiés (AVa) de ces mémoires de gestion (AV), sont chargées avec les informations modifiées qui leur sont destinées, et
que pendant la période transitoire - pendant les pauses de fonctionnement des mémoires considérées (AVa, AVb) - les informations qui sont mémorisées dans la première moitié (AVa ou AVb) de la mémoire de gestion et commandent, à partir de la réunification, l'opération de commutation, sont enregistrées automatiquement également dans la seconde moitié (AVb ou AVa) de la mémoire de gestion, avant que les deux moitiés (AVa, AVb) de la mémoire de gestion de chaque processeur (BP, CP, IOC) travaillent à nouveau d'une manière entièrement efficace, comme pendant les périodes de fonctionnement normales.

7. Procédé suivant la revendication 6, caractérisé par le fait
qu'à chaque processeur (BP, CP, IOC) est également associée une mémoire locale particulière doublée (LMY), dans laquelle sont enregistrés des éléments de programme de commutation qui sont nécessaires fréquemment et immédiatement dans des cas d'urgence,
que le calculateur spécial comporte simultanément respectivement les premières moitiés de toutes ces mémoires locales (LMY) de tous les processeurs (BP, CP, IOC),
qu'avant la réunification, toutes les moitiés, contenues dans le calculateur spécial, de ces mémoires spéciales (LMY), mais pas les autres moitiés de ces mémoires locales (LMY), sont chargées avec les informations modifiées qui leur sont destinées, et
que pendant la période transitoire - pendant les pauses de fonctionnement des moitiés considérées - les informations qui sont mémorisées dans la première moitié des mémoires locales (LMY) et qui commandent l'opération de commutation depuis la réunification, sont également copiées automatiquement dans la seconde moitié correspondante respective de ces mémoires locales (LMY), avant que ces deux moitiés des mémoires locales (LMY) des processeurs (BP, CP, IOC) travaillent à nouveau d'une manière entièrement efficace en parallèle, comme pendant les périodes de fonctionnement normal.

8. Procédé suivant l'une des revendications précédentes, caractérisé par le fait
qu'au moins une partie des informations modifiées introduites dans la mémoire de gestion (AV) modifie la taille de l'espace adresses défini par des adresses physiques.

9. Procédé suivant l'une des revendications précédentes, caractérisé par le fait
qu'au moins une partie des informations modifiées correspond à un système nouvellement installé pour l'abonné.

10. Procédé suivant la revendication 9, caractérisé par le fait
qu'au moins une partie des informations modifiées correspondant aux adresses de départ de sous-programmes commandant l'installation.

11. Procédé suivant l'une des revendications précédentes, caractérisé par le fait
que l'unité de raccordement (O&M) du calculateur spécial comporte un support de données extérieur, qui porte des informations modifiées enregistrées magnétiquement; et
que les informations modifiées sont enregistrées par ce support de données dans des sections de mémoire (CMY1, LMY, AV) du calculateur spécial.

12. Procédé suivant l'une des revendications précédentes, caractérisé par le fait
que l'unité de raccordement (O&M) représente un poste d'opérateur doublé (O&M), et
que les informations modifiées sont introduites dans le calculateur spécial par l'intermédiaire d'une moitié séparée du poste de l'opérateur (O&M).

13. Procédé suivant l'une des revendications précédentes, caractérisé par le fait
qu'avant même la séparation du calculateur spécial ou seulement après la séparation du calculateur spécial, mais encore avant la réunification, au moins une partie des informations qui sont mémorisées de façon semi-permanente dans la mémoire de gestion (AV) du calculateur spécial et/ou dans d'autres sections de mémoire (CMY1, LMY) du calculateur spécial, est traduite par une première unité de traduction (disposée par exemple dans CMY ou dans O&M) en un langage de niveau supérieur - par exemple un langage d'ordres tel que MML et/ou en un langage de programmation de niveau supérieur tel que CHILL et/ou dans un langage de manipulation - et délivrée à l'unité de raccordement (O&M) du calculateur spécial, par exemple affichée ou imprimée ou enregistrée sur un support de données, et
que pendant la durée de fonctionnement spécial, les informations modifiées sont introduites avec le même langage ou dans un autre langage de niveau supérieur, dans le calculateur spécial, par l'intermédiaire de l'unité de raccordement (O&M), et sont traduites dans la première ou dans une seconde unité de traduction de langage (située par exemple dans CMY) en le langage machine et sont mémorisées dans les sections de mémoire respectivement concernées (CMY1, LMY, AVb) du calculateur spécial.

14. Procédé suivant l'une des revendications précédentes, caractérisé par le fait
que pendant la durée de fonctionnement spécial, des sections de mémoire des moitiés d'éléments constitutifs du système de commutation, qui sont doublés de façon redondante, sont raccordées de façon périphérique à l'unité de commande centrale et contiennent des sections de mémoire particulières, c'est-à-dire décentralisées, et des processeurs particuliers, sont contenues simultanément dans le calculateur spécial.
